# EUROPEAN PATENT APPLICATION

(11) **EP 4 412 282 A1**
(43) Date of publication of application: **07.08.2024**
(21) Application number: 22882820.8
(22) Date of filing: 17.10.2022
(51) Int. Cl.: H04W 16/28

(54) **BEAM FAILURE RECOVERY METHOD AND COMMUNICATION APPARATUS**

(30) Priority: 20.10.2021 CN 202111223390
(71) Applicant: Huawei Technologies Co., Ltd., Shenzhen, Guangdong 518129 (CN)
(72) Inventor: GU, Zhifang, Shenzhen, Guangdong 518129 (CN); LOU, Chong, Shenzhen, Guangdong 518129 (CN); FAN, Qiang, Shenzhen, Guangdong 518129 (CN); YOU, Chunhua, Shenzhen, Guangdong 518129 (CN)
(74) Representative: Pfenning, Meinig & Partner mbB
(86) International application number: PCT/CN2022/125744
(87) International publication number: WO 2023/066214

(57) **Abstract**

A beam failure recovery method and a communication apparatus are provided. The method includes: A terminal device initiates a random access process when detecting that a beam failure occurs on all M TRPs associated with a special cell; determines available beams of N TRPs in the M TRPs, where 1 < N ≤ M, and M and N are integers; and sends first information to a network device in the random access process, where the first information indicates information about the available beams of the N TRPs, and each of the N TRPs corresponds to one available beam. After receiving the first information, the network device returns a random access response message to the terminal device. In the random access process, the terminal device reports information about available beams of a plurality of TRPs, to reduce time consumed in an entire beam failure recovery process, and quickly complete beam failure recovery of the plurality of TRPs, thereby improving communication reliability and increasing a transmission capacity.

## Description

This application claims priority to Chinese Patent Application No. 202111223390.5, filed with the China National Intellectual Property Administration on October 20, 2021 and entitled "BEAM FAILURE RECOVERY METHOD AND COMMUNICATION APPARATUS", which is incorporated herein by reference in its entirety.

### TECHNICAL FIELD

This application relates to the communication field, and more specifically, to a beam failure recovery method and a communication apparatus.

### BACKGROUND

A terminal device may perform data transmission with a plurality of transmission reception points (transmission reception points, TRPs), to improve communication reliability and increase a transmission capacity. In a massive (massive) multiple-input multiple-output (multiple-input multiple-output, MIMO) technology, beam management needs to be performed, and a beam direction with good communication quality is used for communication. In some scenarios, for example, in a high-frequency communication scenario, because a wavelength of a radio signal is short, communication quality of a transmit-receive beam pair established between the terminal device and the plurality of TRPs is likely to deteriorate due to movement of the terminal device, beam blocking, or another reason, and a beam failure occurs. Therefore, the terminal device needs to be triggered to perform beam failure recovery (beam failure recovery, BFR).

### SUMMARY

This application provides a beam failure recovery method and a communication apparatus, to reduce time consumed in beam failure recovery of a plurality of TRPs in a special cell, and quickly complete the beam failure recovery of the plurality of TRPs, thereby improving communication reliability and increasing a transmission capacity.

According to a first aspect, this application provides a beam failure recovery method. The method may be performed by a terminal device, or may be performed by a component (such as a chip or a chip system) configured in a terminal device, or may be implemented by a logical module or software that can implement all or some functions of a terminal device. This is not limited in this application.

For example, the method includes: when detecting that a beam failure occurs on all M TRPs associated with a special cell (special cell, SpCell), initiating a random access process; determining available beams of N TRPs in the M TRPs, where 1 < N < M, and M and N are integers; and sending first information to a network device in the random access process, where the first information indicates information about the available beams of the N TRPs, and each of the N TRPs corresponds to one available beam.

Based on the foregoing technical solution, when detecting that the beam failure occurs on a plurality of TRPs associated with the SpCell, the terminal device initiates the random access process. If determining that at least two TRPs have available beams, the terminal device reports information about the available beams of the at least two TRPs to the network device in the random access process. Compared with a method of reporting information about an available beam of only one TRP to the network device in the random access process, in this solution, time consumed in an entire beam failure recovery process is reduced, and beam failure recovery of the plurality of TRPs may be quickly completed, thereby improving communication reliability and increasing a transmission capacity.

With reference to the first aspect, in some possible implementations of the first aspect, the method further includes: determining a type of random access based on reference signal received strength of the SpCell.

When the beam failure occurs on all the M TRPs in the SpCell, the terminal device triggers the random access process. The type of the random access includes contention-free random access (contention-free random access, CFRA) and contention-based random access (contention-based random access, CBRA). The CBRA includes two-step CBRA and four-step CBRA, and the CFRA includes two-step CFRA and four-step CFRA. In a possible implementation, the terminal device determines the type of the random access based on the reference signal received strength of the SpCell. Specifically, when identifying an available beam of the SpCell, the terminal device may further determine the type of the random access based on the reference signal received strength corresponding to the identified available beam of the SpCell. It may be understood that when sending a preamble in a CFRA process, the terminal device uses a beam direction corresponding to the preamble. Therefore, a higher reference signal received strength corresponding to an available beam is better, and a preamble is sent via a beam direction with high signal strength, thereby increasing a probability of successfully sending the preamble.

With reference to the first aspect, in some possible implementations of the first aspect, the determining a type of random access based on reference signal received strength of the SpCell includes: if the reference signal received strength of the SpCell is greater than a preset threshold, determining that the type of the random access is the CFRA in two-step random access (two-step CFRA for short); or if the received strength of the reference signal of the SpCell is less than or equal to a preset threshold, determining that the type of the random access is the CFRA in four-step random access (four-step CFRA for short).

In a possible design, the terminal device selects the two-step CFRA when the reference signal received strength of the SpCell is greater than the preset threshold, and selects the four-step CFRA when the reference signal received strength of the SpCell is less than or equal to the preset threshold. A specific implementation is provided. When the network device configures both the two-step CFRA and the four-step CFRA for the terminal device, the terminal device may determine the type of the random access based on the foregoing method. The reference signal received strength of the SpCell may be understood as an average value of reference signal received strength corresponding to the available beams of the N TRPs in the SpCell, or a maximum value of the reference signal received strength corresponding to the available beams of the N TRPs in the SpCell. For example, reference signals corresponding to the available beams of the N TRPs in the SpCell are respectively a CSI-RS #1, a CSI-RS #2, and a CSI-RS #3. An average value of received strength of the three reference signals is used as the reference signal received strength of the SpCell, so that the average value is compared with the preset threshold, and the type of the random access is further determined based on a comparison result.

With reference to the first aspect, in a possible implementation of the first aspect, the method further includes: determining a first TRP based on reference signal received strength of the N TRPs in the SpCell.

The terminal device determines a TRP that is in the N TRPs and that has the highest reference signal received strength as the first TRP. The reference signal corresponds to a beam direction. It may be understood that the terminal device reports information about an available beam of the first TRP via a preamble, and a beam direction used for sending the preamble is a beam direction of the available beam of the first TRP. Therefore, a TRP with the highest reference signal received strength is selected as the first TRP, thereby effectively increasing the probability of successfully sending the preamble.

With reference to the first aspect, in some possible implementations of the first aspect, the method further includes: receiving configuration information from the network device, where the configuration information includes a CFRA parameter in the two-step random access and/or a CFRA parameter in the four-step random access.

The configuration information received by the terminal device from the network device may include a plurality of random access configurations, for example, may include a two-step CFRA parameter, a four-step CFRA parameter, or a two-step CFRA parameter and a four-step CFRA parameter. Compared with a conventional technology, regardless of whether a two-step CFRA configuration is added, in other words, even if only the four-step CFRA is configured in the configuration information, the terminal device may report information about available beams of a plurality of TRPs in the random access process, to quickly complete the beam failure recovery of the plurality of TRPs. This helps improve the communication reliability and increase the transmission capacity.

With reference to the first aspect, in some possible implementations of the first aspect, the method further includes: receiving a random access response message from the network device, where the random access response message is carried on a physical downlink control channel (physical downlink control channel, PDCCH). The PDCCH is scrambled by using a first radio network temporary identifier (radio network temporary identifier, RNTI), where the first RNTI corresponds to a second TRP, and the second TRP is a TRP whose beam is successfully recovered; a search space in which the PDCCH is located corresponds to a second TRP, and the second TRP is a TRP whose beam is successfully recovered; or the PDCCH is scrambled by using a cell radio network temporary identifier (cell radio network temporary identifier, C-RNTI), where the C-RNTI corresponds to the terminal device.

It may be understood that, in the method provided in this application, the terminal device reports the information about the available beams of the N TRPs in the random access process, but the network device may successfully receive information about available beams of only some of the N TRPs. Therefore, the random access response message received by the terminal device from the network device needs to distinguish which TRPs are those whose available beam information is successfully received. In a possible design, the TRP corresponds to the first RNTI. In another possible design, the TRP corresponds to the search space. Different TRPs correspond to different first RNTIs or search spaces, so that the terminal device can identify available beams that are of TRPs and that are successfully received by the network device, that is, TRPs whose beams are successfully recovered, so that the terminal device re-reports information about available beams that are of TRPs and that fail to be received in a timely manner, thereby quickly completing the beam recovery process of the plurality of TRPs.

It may be further understood that the network device may also successfully receive the information about the available beams of the N TRPs. In this case, the terminal device does not need to distinguish which TRPs are those whose available beam information is successfully received. Therefore, the random access response message may be scrambled by using the C-RNTI, where the C-RNTI is an RNTI configured by the network device for each terminal device. In this way, the terminal device may descramble the random access response message based on the C-RNTI, to quickly complete the beam recovery process of the plurality of TRPs.

It should be noted that scrambling the random access response message may be understood as scrambling the PDCCH carrying the random access response message. For ease of description, both concepts are used in the following, but the two concepts express a same meaning.

With reference to the first aspect, in some possible implementations of the first aspect, the method further includes: after the random access process is completed, sending, to the network device, information about an available beam of a TRP that fails to be recovered.

After the random access process is completed, the terminal device continues to report, to the network device, information about an available beam of another TRP that fails to be recovered, to quickly complete the beam failure recovery of the plurality of TRPs, thereby improving the communication reliability and increasing the transmission capacity.

According to a second aspect, this application provides a beam failure recovery method. The method may be performed by a network device, or may be performed by a component (such as a chip or a chip system) configured in a network device, or may be implemented by a logical module or software that can implement all or some functions of a network device. This is not limited in this application.

For example, the method includes: receiving first information from a terminal device in a random access process, where the first information indicates information about available beams of N TRPs in M TRPs associated with an SpCell, each of the N TRPs corresponds to one available beam, and the random access process is a process triggered when the terminal device detects that a beam failure occurs on all the M TRPs, where 1 < N < M, and M and N are integers; and sending a random access response message to the terminal device based on the first information.

Based on the foregoing technical solution, the network device may receive information about available beams of a plurality of TRPs that is reported by the terminal device in the random access process, and send the random access response message to the terminal device, to quickly complete beam failure recovery of the plurality of TRPs, thereby improving communication reliability and increasing a transmission capacity.

With reference to the second aspect, in some possible implementations of the second aspect, the method further includes: sending configuration information to the terminal device, where the configuration information includes a CFRA parameter in two-step random access and/or a CFRA parameter in four-step random access.

The configuration information sent by the network device may include a two-step CFRA parameter, a four-step CFRA parameter, or a two-step CFRA parameter and a four-step CFRA parameter.

With reference to the second aspect, in some possible implementations of the second aspect, the random access response message is carried on a PDCCH. When information about available beams of n TRPs in the N TRPs is successfully received, the PDCCH is scrambled by using a first RNTI, where the first RNTI corresponds to a second TRP, and the second TRP is a TRP whose beam is successfully recovered, or a search space in which the PDCCH is located corresponds to a second TRP, and the second TRP is a TRP whose beam is successfully recovered, where 1 < n < N, and n is an integer. When the information about all the available beams of the N TRPs is received, the PDCCH is scrambled by using a C-RNTI, where the C-RNTI corresponds to the terminal device.

It may be understood that, in the method provided in this application, the terminal device reports the information about the available beams of the N TRPs in the random access process, but the network device may successfully receive information about available beams of only some of the N TRPs. Therefore, the response message received by the terminal device from the network device needs to distinguish which TRPs are those whose available beam information is successfully received. In a possible design, the TRP corresponds to the first RNTI. In another possible design, the TRP corresponds to the search space. The network device enables different TRPs to correspond to different first RNTIs or search spaces, so that the terminal device can identify available beams that are of TRPs and that are successfully received by the network device, that is, TRPs whose beams are successfully recovered, so that the terminal device re-reports information about available beams that are of TRPs and that fail to be recovered in a timely manner, thereby quickly completing a beam recovery process of the plurality of TRPs.

If the network device successfully receives the information about the available beams of the N TRPs, the network device may scramble the random access response message based on the RNTI configured for the terminal device, that is, the C-RNTI, so that the terminal device descrambles the random access response message via the C-RNTI, to quickly complete the beam recovery process of the plurality of TRPs.

With reference to the second aspect, in some possible implementations of the second aspect, the method further includes: after the random access process is completed, receiving, from the terminal device, information about an available beam of a TRP that fails to be recovered.

After the random access process is completed, the terminal device continues to report, to the network device, information about an available beam of another TRP that fails to be recovered, so that after receiving the information, the network device returns the response message to the terminal device, to quickly complete the beam failure recovery of the plurality of TRPs, thereby improving the communication reliability and increasing the transmission capacity.

With reference to the first aspect or the second aspect, in some possible implementations, when the type of the random access is the CFRA in the four-step random access, the first information includes N preambles, and the N preambles are in one-to-one correspondence with the available beams of the N TRPs.

In the random access process, the terminal device indicates the information about the available beams of the N TRPs via the N preambles, and the preambles are in one-to-one correspondence with the TRPs, so that information about available beams of a plurality of TRPs may be reported in the random access process. Compared with reporting the information about the available beam of only one TRP to the network device in the random access process, this reduces time consumed in the entire beam failure recovery process, and may quickly complete the beam failure recovery of the plurality of TRPs, thereby improving the communication reliability and increasing the transmission capacity.

With reference to the first aspect or the second aspect, in some possible implementations, when the type of the random access is the CFRA in the two-step random access, the first information includes one preamble and at least one medium access control (medium access control, MAC) control element (control element, CE), the preamble indicates the available beam of the first TRP, and the at least one MAC CE indicates an available beam of a TRP other than the first TRP in the N TRPs.

In the random access process, the terminal device indicates the information about the available beams of the N TRPs via the preamble and the at least one MAC CE. In other words, the terminal device may report the information about the available beams of the plurality of TRPs in the random access process, to reduce time consumed in the entire beam failure recovery process, and quickly complete the beam failure recovery of the plurality of TRPs, thereby improving the communication reliability and increasing the transmission capacity.

According to a third aspect, this application provides a beam failure recovery method. The method may be performed by a terminal device, or may be performed by a component (such as a chip or a chip system) configured in a terminal device, or may be implemented by a logical module or software that can implement all or some functions of a terminal device. This is not limited in this application.

For example, the method includes: when detecting that a beam failure occurs on P TRPs of M TRPs in an SpCell, sending a beam recovery request to a network device, where 1 < P < M, and P and M are integers; and when receiving no response message of the beam recovery request and detecting that the beam failure occurs on all the M TRPs, triggering a random access process, where the response message indicates a TRP whose beam is successfully recovered; or after receiving the response message from the network device, canceling the random access process.

Based on the foregoing technical solution, the terminal device sends the beam recovery request to the network device when detecting that the beam failure occurs on some TRPs in the SpCell, and triggers the random access process when receiving no response message of the beam recovery request and detecting that the beam failure occurs on all TRPs, or cancels the random access process when receiving the response message from the network device and not completing the random access process, thereby reducing a quantity of occurrences of the random access. This reduces communication interruption time in the random access process and therefore improves communication reliability.

With reference to the third aspect, in a possible implementation of the third aspect, the method further includes: The terminal device sends a scheduling request (scheduling request, SR) to the network device when the beam failure occurs on the P TRPs and there is no available uplink resource for sending the beam recovery request, where a resource carrying the SR is associated with a third TRP, and the third TRP is a TRP with no beam failure.

The beam recovery request may be sent via a MAC CE. When there is no available uplink resource for sending the MAC CE, the terminal device sends the SR to the network device. The resource carrying the SR, for example, a physical uplink control channel (physical uplink control channel, PUCCH) resource, may be associated with a TRP. The terminal device may send the PUCCH resource via a beam direction of a TRP with no beam failure, thereby increasing a probability of successfully sending the SR.

According to a fourth aspect, this application provides a beam failure recovery method. The method may be performed by a network device, or may be performed by a component (such as a chip or a chip system) configured in a network device, or may be implemented by a logical module or software that can implement all or some functions of a network device. This is not limited in this application.

For example, the method includes: receiving a beam recovery request from the terminal device, where the beam recovery request is a request indicating information about available beams of P TRPs in M TRPs in an SpCell when a beam failure occurs on the P TRPs, 1 ≤ P < M, and P and M are integers; and sending a response message to the terminal device after the terminal device triggers a random access process, where the response message indicates whether beams of the P TRPs are successfully recovered.

Based on the foregoing technical solution, the network device receives the beam recovery request for some TRPs in the SpCell from the terminal device, and sends the response message of the beam recovery request to the network device only when the terminal device does not trigger the random access process. In other words, if beams of some TRPs in the SpCell are successfully recovered, the terminal device may cancel the random access process. Therefore, a quantity of occurrences of random access is reduced, in other words, communication interruption time in a random access process is reduced, and communication reliability is improved.

With reference to the fourth aspect, in some possible implementations of the fourth aspect, the method further includes: receiving an SR from the terminal device, where a resource carrying the SR is associated with a third TRP, and the third TRP is a TRP with no beam failure.

The resource carrying the SR may be, for example, a PUCCH resource. That a resource carrying the SR is associated with a third TRP may be understood as that the terminal device sends the PUCCH resource via a beam direction of a TRP with no beam failure, so that the network device successfully receives the SR.

With reference to the third aspect or the fourth aspect, in some possible implementations, a type of random access is CBRA.

It may be understood that when the type of the random access is the CBRA, all terminal devices in a cell share a random access resource. If the random access process is canceled, a quantity of terminal devices that are in the cell and that contend for the random access resource may be reduced. When the type of the random access is CFRA, each terminal device has a random access resource. Therefore, the terminal device may cancel the random access process, or may not cancel the random access process. This is not limited in this application.

With reference to the third aspect or the fourth aspect, in some possible implementations, a cell group in which the terminal device is located includes a plurality of SR configurations, each of the plurality of SR configurations corresponds to one TRP, and each SR configuration includes a maximum SR transmission count.

With reference to the third aspect or the fourth aspect, in some possible implementations, the cell group in which the terminal device is located includes one SR configuration, the SR configuration corresponds to a plurality of TRPs, and the SR configuration includes a maximum SR transmission count of the plurality of TRPs.

It should be understood that, when the beam failure occurs on some or all TRPs in a secondary cell (secondary cell, SCell), information about an available beam may be indicated by a MAC CE. If there is no available uplink resource for sending the MAC CE, the terminal device may also send the SR to the network device. In this case, an SR configuration method provided in this application may also be applied.

According to a fifth aspect, this application provides a communication apparatus, to implement the method according to any one of the first aspect to the fourth aspect and the possible implementations of the first aspect to the fourth aspect. The apparatus includes a corresponding unit configured to perform the foregoing method. The unit included in the apparatus may be implemented in a software and/or hardware manner. The apparatus may be, for example, a terminal device or a network device, or may be a chip, a chip system, a processor, or the like that supports a terminal device or a network device in implementing the foregoing method, or may be a logical module or software that can implement all or some functions of a terminal device or a network device.

According to a sixth aspect, this application provides a communication apparatus, where the communication apparatus includes a processor. The processor is coupled to a memory, and may be configured to execute a computer program in the memory, to implement the beam failure recovery method according to any one of the first aspect to the fourth aspect and the possible implementations of the first aspect to the fourth aspect.

Optionally, the communication apparatus further includes the memory.

Optionally, the communication apparatus further includes a communication interface, and the processor is coupled to the communication interface.

According to a seventh aspect, this application provides a communication apparatus, including a processor and an interface circuit, where the interface circuit is configured to: receive a signal from a communication apparatus other than the communication apparatus and transmit the signal to the processor, or send a signal from the processor to a communication apparatus other than the communication apparatus, and the processor is configured to implement the beam failure recovery method according to any one of the first aspect to the fourth aspect and the possible implementations of the first aspect to the fourth aspect by using a logic circuit or by executing code instructions.

Optionally, the communication apparatus in the fifth aspect to the seventh aspect is a terminal device.

Optionally, the communication apparatus in the fifth aspect to the seventh aspect is a network device.

According to an eighth aspect, this application provides a computer-readable storage medium. The computer-readable storage medium stores a computer program or instructions. When the computer program or the instructions are executed, the beam failure recovery method according to any one of the first aspect to the fourth aspect and the possible implementations of the first aspect to the fourth aspect is implemented.

According to a ninth aspect, this application provides a computer program product, where the computer program product includes instructions. When the instructions are run, the beam failure recovery method according to any one of the first aspect to the fourth aspect and the possible implementations of the first aspect to the fourth aspect is implemented.

According to a tenth aspect, this application provides a chip system, where the chip system includes a processor, and may further include a memory. The chip system is configured to implement the beam failure recovery method according to any one of the first aspect to the fourth aspect and the possible implementations of the first aspect to the fourth aspect. The chip system may include a chip, or may include a chip and another discrete component.

According to an eleventh aspect, this application provides a communication system, where the communication system includes the terminal device and the network device according to the foregoing aspects.

It should be understood that technical solutions of the fifth aspect to the eleventh aspect of this application correspond to technical solutions of the first aspect to the fourth aspect of this application, and advantageous effects achieved by the aspects and the corresponding feasible implementations are similar. Details are not described again.

### BRIEF DESCRIPTION OF DRAWINGS

FIG. 1 is a schematic diagram of a relationship between an SpCell and an SCell according to an embodiment of this application;
FIG. 2 is a schematic diagram of a relationship between a reference signal and a beam direction according to an embodiment of this application;
FIG. 3 is a schematic diagram of a network architecture of a communication system according to an embodiment of this application;
FIG. 4 is a schematic flowchart of a beam failure recovery method according to an embodiment of this application;
FIG. 5 is a schematic diagram of a format of a MAC CE according to an embodiment of this application;
FIG. 6 is a schematic diagram of another format of a MAC CE according to an embodiment of this application;
FIG. 7 is a schematic diagram of still another format of a MAC CE according to an embodiment of this application;
FIG. 8 is a schematic flowchart of another beam failure recovery method according to an embodiment of this application; and
FIG. 9 to FIG. 12 are schematic diagrams of structures of possible communication apparatuses according to embodiments of this application.

### DESCRIPTION OF EMBODIMENTS

The following describes technical solutions of this application with reference to accompanying drawings.

The technical solutions provided in this application may be applied to various communication systems, for example, a global system for mobile communications (global system for mobile communications, GSM), a code division multiple access (code division multiple access, CDMA) system, a wideband code division multiple access (wideband code division multiple access, WCDMA) system, a general packet radio service (general packet radio service, GPRS), a wireless local area network (wireless local area network, WLAN), a long term evolution (long term evolution, LTE) system, an LTE frequency division duplex (frequency division duplex, FDD) system, an LTE time division duplex (time division duplex, TDD), a universal mobile telecommunications system (universal mobile telecommunications system, UMTS), a worldwide interoperability for microwave access (worldwide interoperability for microwave access, WiMAX) communication system, and a 5G mobile communication system or a new radio access technology (new radio Access Technology, NR) The 5G mobile communication system may include non-standalone (non-standalone, NSA) networking and/or standalone (standalone, SA) networking.

The technical solutions provided in this application may be further applied to a future communication system, for example, a 6th generation (6th Generation, 6G) mobile communication system. This is not limited in this application.

In embodiments of this application, a network device may be any device having a wireless transceiver function. The device includes but is not limited to: an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseband unit, BBU), an access point (access point, AP) in a wireless fidelity (wireless fidelity, Wi-Fi) system, a wireless relay node, a wireless backhaul node, or the like, or may be 5G, for example, a gNB in an NR system, or one or a group of (including a plurality of antenna panels) antenna panels of a base station in a 5G system, or may be a network node that forms a gNB, for example, a baseband unit (BBU), a distributed unit (distributed unit, DU), a central unit (centralized unit, CU), a base station in a next generation (for example, a sixth generation (6th Generation, 6G)) communication system, or the like.

In some deployments, the gNB may include a CU and a DU. For example, the CU implements some functions of the gNB, and the DU implements some functions of the gNB. For example, the CU is responsible for processing a non-real-time protocol and a service, and implements functions of a radio resource control (radio resource control, RRC) layer and a packet data convergence protocol (packet data convergence protocol, PDCP) layer. The DU may include functions of a radio link control (radio link control, RLC) layer, functions of a MAC layer, and some functions of a physical (physical, PHY) layer.

For example, the DU may include a function of an upper layer in the PHY layer. The function of the upper layer in the PHY layer may include a cyclic redundancy check (cyclic redundancy check, CRC) function, channel coding, rate matching, scrambling, modulation, and layer mapping. Alternatively, the function of the upper layer in the PHY layer may include cyclic redundancy check, channel coding, rate matching, scrambling, modulation, layer mapping, and precoding. A function of a lower layer in the PHY layer may be implemented by another network entity independent of the DU. The function of the lower layer in the PHY layer may include precoding, resource mapping, physical antenna mapping, and radio frequency functions. Alternatively, the function of the lower layer in the PHY layer may include resource mapping, physical antenna mapping, and radio frequency functions. Function division of the upper layer and the lower layer in the PHY layer is not limited in embodiments of this application. When the function of the lower layer in the PHY layer may be implemented by another network entity independent of the DU, that the DU sends data or information to another communication apparatus (for example, a terminal device or a core network device) may be understood as: The DU performs functions of the RLC layer and the MAC layer, and some functions of the PHY layer. For example, after the DU completes the functions of the RLC layer and the MAC layer, and cyclic redundancy check, channel coding, rate matching, scrambling, modulation, and layer mapping, the network entity that is independent of the DU and that performs the function of the lower layer in the PHY layer performs remaining functions of mapping and sending on a physical resource.

The network device provides a service for a cell, and a terminal device uses a transmission resource (for example, a frequency domain resource, or a spectrum resource) allocated by the network device to communicate with the cell. The cell may belong to a macro base station (for example, a macro eNB or a macro gNB), or may belong to a base station corresponding to a small cell (small cell). The small cell herein may include: a metro cell (metro cell), a micro cell (micro cell), a pico cell (pico cell), a femto cell (femto cell), or the like. These small cells have characteristics of small coverage and low transmit power, and are applicable to providing a high-speed data transmission service.

A terminal device in embodiments of this application may be referred to as UE, an access terminal, a subscriber unit, a subscriber station, a mobile station, a mobile console, a remote station, a remote terminal, a mobile device, a user terminal, a terminal, a wireless communication device, a user agent, or a user apparatus.

The terminal device may be a device that provides voice/data connectivity for a user, for example, a hand-held device or an in-vehicle device with a wireless connection function. Currently, the terminal device may be a mobile phone, a tablet computer, a computer with a wireless transceiver function (such as a notebook computer or a palmtop computer), a mobile internet device (mobile internet device, MID), a virtual reality (virtual reality, VR) device, an augmented reality (augmented reality, AR) device, a wireless terminal in industrial control, a wireless terminal in self driving, a wireless terminal in telemedicine, a wireless terminal in a smart grid, a wireless terminal in transportation safety, a wireless terminal in a smart city, a wireless terminal in a smart home, a cellular phone, a cordless phone, a session initiation protocol (session initiation protocol, SIP) phone, a wireless local loop (wireless local loop, WLL) station, a personal digital assistant (personal digital assistant, PDA), a hand-held device or computing device with a wireless communication function or another processing device, vehicle-mounted device, or wearable device connected to a wireless modem, a terminal device in a 5G network, or a terminal device in a future evolved public land mobile network (public land mobile network, PLMN).

The wearable device may also be referred to as a wearable intelligent device, and is a general term of wearable devices, such as glasses, gloves, watches, clothes, and shoes, that are intelligently designed and developed for daily wear by applying wearable technologies. The wearable device is a portable device that can be directly worn on the body or integrated into clothes or an accessory of a user. The wearable device is not only a hardware device, but also implements a powerful function through software support, data exchange, and cloud interaction. In a broad sense, the wearable intelligent device includes a full-featured and large-size device that may implement complete or partial functions without depending on a smartphone, for example, a smartwatch or smart glasses, and focuses on only a type of application function and needs to be used with another device such as a smartphone, for example, various smart bands and smart jewelry used for vital sign monitoring.

In addition, the terminal device may alternatively be a terminal device in an internet of things (internet of things, IoT) system. The IoT is an important part of future information technology development. A main technical feature of the IoT is to connect things to a network by using a communication technology, to implement a smart network for human-machine interconnection and thing-thing interconnection. In an IoT technology, massive connections, deep coverage, and power saving of a terminal may be implemented by using, for example, a narrowband (narrowband, NB) technology.

In addition, the terminal device may alternatively include sensors such as an intelligent printer, a train detector, and a gas station, and main functions include: collecting data (which is a function of some terminal devices), receiving control information and downlink data of a network device, sending an electromagnetic wave, and transmitting uplink data to the network device.

To better understand a communication method provided in embodiments of this application, terms used in this application are first briefly described.
1. SpCell and SCell: The SpCell includes a primary cell (primary cell, PCell) and a primary secondary cell (primary secondary cell, PSCell).

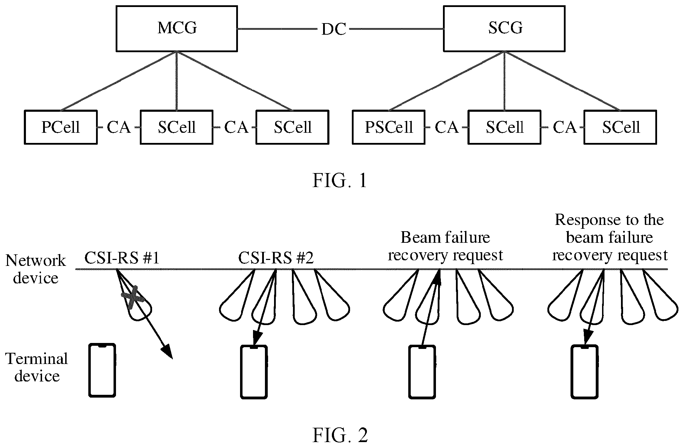

FIG. 1 is a schematic diagram of a relationship between an SpCell and an SCell according to an embodiment of this application. The following describes concepts of the SpCell and the SCell in detail with reference to FIG. 1.

A terminal device may communicate with one or more cells. When the terminal device communicates with a single cell, the cell may be referred to as the SpCell. The terminal device may communicate with a plurality of cells in two manners: The terminal device communicates with the plurality of cells in a dual connectivity (dual connectivity, DC) manner, or the terminal device communicates with the plurality of cells in a carrier aggregation (carrier aggregation, CA) manner. When the terminal device communicates with the plurality of cells in the CA manner, the plurality of cells include the PCell and the SCell, where the PCell may be referred to as the SpCell.

When the terminal device communicates with the plurality of cells in the DC manner, as shown in FIG. 1, there are a master cell group (master cell group, MCG) and a secondary cell group (secondary cell group, SCG). The MCG may include a plurality of cells. A cell used to initiate initial access is referred to as the PCell, in other words, a cell serving as a general command in the plurality of cells is referred to as the PCell, and the remaining cells are referred to as the SCell. The PCell and the SCell in the MCG are combined by using a CA technology. Similarly, the SCG may also include a plurality of cells. A cell used to initiate initial access is referred to as the PSCell, in other words, a cell serving as a general command in the plurality of cells in the SCG is referred to as the PSCell, and the remaining cells are referred to as the SCell. The PSCell and the SCell in the SCG are combined by using the CA technology. The SpCell includes the PCell in the MCG and the PSCell in the SCG. It should be understood that, when the terminal device communicates with more than two cell groups, the concept of the SpCell may be correspondingly extended.

2. TRP: The TRP is a network node that may be configured to implement receiving and/or sending. The network node configured to implement sending may also be referred to as a transmission point (transmission point, TP), and the network node configured to implement receiving may also be referred to as a reception point (reception point, RP). In embodiments of this application, the TRP may be understood as a plurality of geographically separated antennas or antenna panels of a network device (for example, a base station), to receive and/or send a radio signal at different geographical locations in different beam directions.

Each cell may include one or more TRPs. In the cell, a terminal device may perform data transmission with the one or more TRPs. That the terminal device performs data transmission with a plurality of TRPs may be understood as that the terminal device communicates with a plurality of network nodes that implement a receiving function and/or a sending function. That the terminal device communicates with a plurality of TRPs in the cell may also be understood as that the terminal device performs communication by using a plurality of communication resources in the cell. For example, the communication resource may be a space domain resource, for example, a beam direction.

3. Reference signal and reference signal resource: The reference signal may be used for channel measurement, channel estimation, beam quality monitoring, or the like. The reference signal resource may be used to configure transmission attributes of the reference signal, for example, a time-frequency resource position, a port mapping relationship, a power factor, and a scrambling code. For details, refer to the conventional technology. A transmitter device may send the reference signal based on the reference signal resource, and a receiver device may receive the reference signal based on the reference signal resource.

The reference signal in embodiments of this application may include, for example, a channel state information reference signal (channel state information reference signal, CSI-RS) and a synchronization signal block (synchronization signal block, SSB). Correspondingly, the reference signal resource may include a CSI-RS resource (CSI-RS resource) and an SSB resource.

To distinguish between different reference signal resources, each reference signal resource may correspond to one reference signal resource identifier, for example, a CSI-RS resource indicator (CSI-RS resource indicator, CRI) or an SSB resource indicator (SSB resource indicator, SSBRI).

It should be understood that the reference signal and the corresponding reference signal resource that are listed above are merely examples for description, and should not constitute any limitation on this application. This application does not exclude a possibility of defining another reference signal in a future protocol to implement a same or similar function.

4. Beam: The beam may be understood as a spatial filter or a spatial parameter. Abeam used to send a signal may be referred to as a transmit beam, and may be a spatial transmit filter or a spatial transmit parameter. A beam used to receive a signal may be referred to as a receive beam, and may be a spatial receive filter or a spatial receive parameter.

A technology for forming the beam may be a beamforming technology or another technology. For example, the beamforming technology may be specifically a digital beamforming technology, an analog beamforming technology, a hybrid digital/analog beamforming technology, or the like. The transmit beam may refer to signal strength distribution formed in different directions in space after a signal is transmitted through an antenna, and the receive beam may refer to signal strength distribution that is of a radio signal received from an antenna and that is formed in different directions in space.

In an NR protocol, the beam may be, for example, the spatial filter. However, it should be understood that this application does not exclude a possibility of defining another term in a future protocol to represent a same or similar meaning.

In embodiments of this application, the beam is associated with the reference signal. In other words, different reference signals may be sent in different beam directions, and each reference signal corresponds to one beam direction. FIG. 2 is a schematic diagram of a relationship between a reference signal and a beam direction according to an embodiment of this application. The following describes in detail the relationship between the reference signal and the beam direction with reference to FIG. 2.

As shown in FIG. 2, two reference signals are marked in the figure: a CSI-RS #1 and a CSI-RS #2. It can be learned that the CSI-RS #1 and the CSI-RS #2 have different beam directions. A network device sends the CSI-RS #1 to a terminal device. The CSI-RS #1 corresponds to a beam direction. Whether a beam failure occurs on the beam may be determined by detecting the reference signal. When the beam failure occurs, the terminal device may identify an available reference signal, for example, the CSI-RS #2, and the CSI-RS #2 corresponds to another beam direction. The terminal device may send a beam failure recovery request to the network device to indicate the beam direction of the CSI-RS #2. Correspondingly, the network device sends a response to the beam failure recovery request to the terminal device.

It should be noted that, in this embodiment of this application, because the reference signal corresponds to the beam direction, whether the beam failure occurs may be determined by detecting the reference signal.

5. Beam failure recovery: In a high-frequency scenario, a beam failure between a network device and a terminal device may occur. The beam failure recovery may help the network device and the terminal device adjust a currently failed beam to an available beam based on a beam measurement result, to avoid frequent radio link failures caused by the beam failure. Abeam failure recovery process includes steps such as detecting the beam failure, identifying the available beam from a candidate beam, transmitting a beam recovery request, and responding by the network device. For a specific process, refer to a conventional technology. When the beam failure occurs on a plurality of TRPs in an SpCell, the beam failure recovery may be performed through random access.

6. Random access (random access, RA): The random access is a process in which a terminal device sends a random access preamble (preamble) to a network device, then the terminal device starts to attempt to access the network device, and finally a connection between the terminal device and the network device is established.

The random access may be classified into contention-based random access (contention-based random access, CBRA) and contention-free random access (contention-free random access, CFRA). A resource used by the CFRA is a CFRA resource, and the CFRA resource is a dedicated random access channel (random access channel, PRACH) resource. The CFRA resource may specifically include a preamble and a random access occasion (RA occasion, RO). In NR, the CFRA resource may be a CFRA resource associated with a beam in a cell. If the network device configures the CFRA resource for the terminal device, the terminal device may use the CFRA resource to initiate a CFRA process. If the CFRA fails or the CFRA resource is not configured, the terminal device may initiate the CBRA. A CBRA resource may be understood as a common resource, and the terminal device may use the CBRA resource in a contention manner to initiate a CBRA process.

The following briefly describes the CBRA process used for beam failure recovery. The CBRA is classified into four-step CBRA and two-step CBRA.

A four-step CBRA process may specifically include the following step 1 to step 4.

Step 1: The terminal device sends a preamble to the network device on a specific RO through a physical random access channel (physical random access channel, PRACH), where the RO and the preamble are associated with a beam direction, and an association relationship between the RO and the preamble and the beam direction is configured by the network device.

It should be understood that available beam information of an SpCell may be indicated through step 1. It should be further understood that the CBRA resource is the common resource, and a plurality of terminal devices may use the resource in the contention manner.

Step 2: The network device sends a random access response to the terminal device based on the beam direction in step 1. The random access response may include configuration information such as a time-frequency domain resource that can be subsequently used by the terminal device.

Step 3: The terminal device sends a MAC CE for the beam failure recovery on the time-frequency domain resource allocated by the network device, where the MAC CE carries available beam information of an SCell.

Step 4: The network device sends a response message to the terminal device, and if the terminal device successfully receives the response message and determines that the random access succeeds, a random access process is completed.

A two-step CBRA process may specifically include the following step 1 and step 2.

Step 1: The terminal device sends a preamble to the network device on a specific RO and sends a MAC CE on a PUSCH associated with the RO, where the RO and the preamble are associated with a beam direction, an association relationship between the RO and the preamble and the beam direction is configured by the network device, the preamble is carried on a PRACH, and the MAC CE is carried on the PUSCH.

It should be understood that the network device determines available beam information of an SpCell based on the preamble, and determines available beam information of an SCell based on the MAC CE.

Step 2: The network device sends a random access response to the terminal device based on the beam direction in step 1. If the terminal device successfully receives the response message and determines that the random access succeeds, a random access process is completed.

The following briefly describes a process of CFRA in four-step random access (four-step CFRA for short) used for beam failure recovery.

It should be noted that the four-step CFRA does not mean that an entire random access process is divided into four steps, and the four-step CFRA essentially includes only two steps. A four-step CFRA process may specifically include the following step (1) and step (2).

Step (1): When identifying an available beam, the terminal device determines a preamble and an RO that correspond to the available beam, and sends the preamble to the network device on the RO through a PRACH. In the CFRA process, the preamble and the RO are allocated by the network device to the terminal device in advance. In other words, the random access preamble is dedicated.

It should be understood that available beam information of an SpCell may be indicated through step (1).

Step (2): The network device sends a random access response to the terminal device. If the terminal device successfully receives the random access response and determines that the random access succeeds, the random access process is completed.

It should be noted that, to clearly describe the technical solutions in embodiments of this application, terms such as "first" and "second" are used in embodiments of this application to distinguish between same items or similar items that have basically same functions and purposes. For example, a first TRP and a second TRP are merely used to distinguish different TRPs, and a sequence of the first TRP and the second TRP is not limited. A person skilled in the art may understand that the terms such as "first" and "second" do not limit a quantity or an execution sequence, and the terms such as "first" and "second" do not indicate a definite difference.

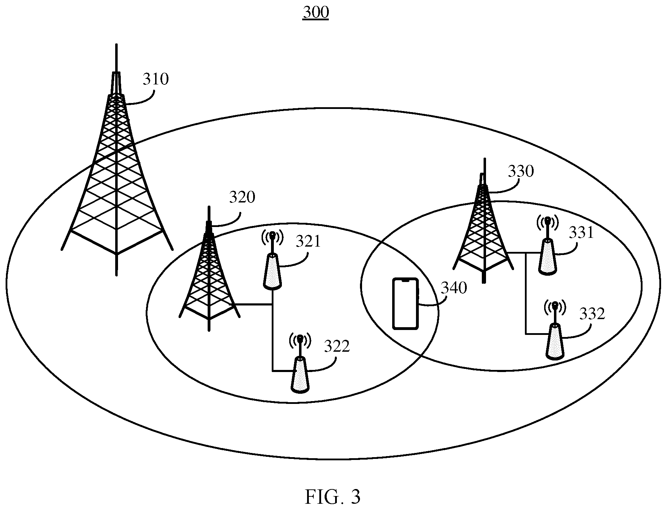

For ease of understanding of embodiments of this application, the following describes, with reference to FIG. 3 in detail, a communication system applicable to embodiments of this application. FIG. 3 is a schematic diagram of a network architecture of a communication system 300 according to an embodiment of this application. As shown in FIG. 3, the communication system 300 may include network devices and a terminal device, for example, a network device 310, a network device 320, a network device 330, and a terminal device 340 that are shown in the figure. The terminal device 340 may be mobile or fixed, and the network device 310 may be a macro base station. The network device 320 and the network device 330 may be micro base stations. Each network device may provide communication coverage for a specific geographical area, and may perform radio link communication with a terminal device located in this coverage area (cell). For example, if the terminal device 340 is simultaneously located in a cell covered by the network device 310, a cell covered by the network device 320, and a cell covered by the network device 330, the terminal device 340 may work in a CA or DC manner.

Optionally, the communication system shown in the communication system 300 may include more or fewer network devices, and a coverage area of each network device may include another quantity of terminal devices. This is not limited in this embodiment of this application.

Among the cells covered by the foregoing network devices, the cell covered by the network device 320 is used as an example. The terminal device 340 may communicate with one or more TRPs in the cell, for example, a TRP 321 and a TRP 322 that are shown in the figure. The TRP 321 and the TRP 322 may be understood as antennas or antenna panels that are remotely deployed in different geographical locations from the network device 320. In other words, the network device and the terminal device may communicate with each other by using a multi-antenna technology. It should be noted that communication between the terminal device 340 and the network device 320 may be understood as that the terminal device communicates with a plurality of TRPs, the TRPs further transmit signals to the network device 320, and the network device 320 processes the signals. Similarly, in the cell covered by the network device 330, the terminal device 340 may communicate with a plurality of TRPs in the cell, for example, a TRP 331 and a TRP 332 that are shown in the figure.

Optionally, each cell may include more or fewer TRPs. This is not limited in this embodiment of this application.

In a massive MIMO technology, beam management needs to be performed, and a beam direction with good communication quality is used for communication. In some scenarios, for example, in a high-frequency communication scenario, a wavelength of a radio signal is short, communication quality of a transmit-receive beam pair established between the terminal device and the plurality of TRPs is likely to deteriorate due to movement of the terminal device, beam blocking, or another reason, and a beam failure occurs. Therefore, the terminal device needs to be triggered to perform beam failure recovery.

Currently, in a beam failure recovery process, when the beam failure occurs on all TRPs in an SpCell, beam recovery is performed by using a random access method. However, in a random access process, the terminal device can indicate information about an available beam of only one of the TRPs in the SpCell to the network device, and information about an available beam of another TRP can be sent to the network device only after the random access process is completed. Consequently, the entire beam failure recovery process of the SpCell takes a long time, and communication reliability and a transmission capacity are reduced in a long period of time.

Therefore, this application provides a beam failure recovery method. When detecting that a beam failure occurs on a plurality of TRPs associated with an SpCell, a terminal device initiates a random access process. If determining that at least two TRPs have available beams, the terminal device reports information about the available beams of the at least two TRPs to a network device in the random access process. Compared with a method of reporting information about an available beam of only one TRP to the network device in the random access process, in this method, time consumed in an entire beam failure recovery process is reduced, and beam failure recovery of the plurality of TRPs may be quickly completed, thereby improving communication reliability and increasing a transmission capacity.

It should be understood that when the terminal device performs multi-TRP transmission with TRPs associated with different cells, the beam failure recovery method provided in this application may also be used. For example, the terminal device performs the multi-TRP transmission with a TRP #1 and a TRP #2, where the TRP #1 and the TRP #2 are associated with different physical cell identifiers (physical cell identifiers, PCIs). The terminal device may consider the TRP #1 and the TRP #2 as two TRPs associated with one SpCell, and perform a beam failure detection and recovery process.

The following describes, with reference to the accompanying drawings in detail, the beam failure recovery method provided in embodiments of this application. It should be understood that the following embodiments describe the method from a perspective of interaction between the terminal device and the network device. The terminal device may be the terminal device 340 shown in FIG. 3, and the network device may be any one of the network devices 310 to 330 shown in FIG. 3.

It should be further understood that, the following embodiments are described by using the interaction between the terminal device and the network device as an example, and should not constitute any limitation on an execution body of the method. The method provided in embodiments of this application may be performed, provided that a program that records code of the method provided in embodiments of this application can be run. For example, the terminal device may alternatively be replaced with a component (for example, a chip or a chip system) configured in the terminal device, or another functional module that can invoke a program and execute the program. The network device may alternatively be replaced with a component (for example, a chip or a chip system) configured in the network device, or another functional module that can invoke a program and execute the program. This is not limited in embodiments of this application.

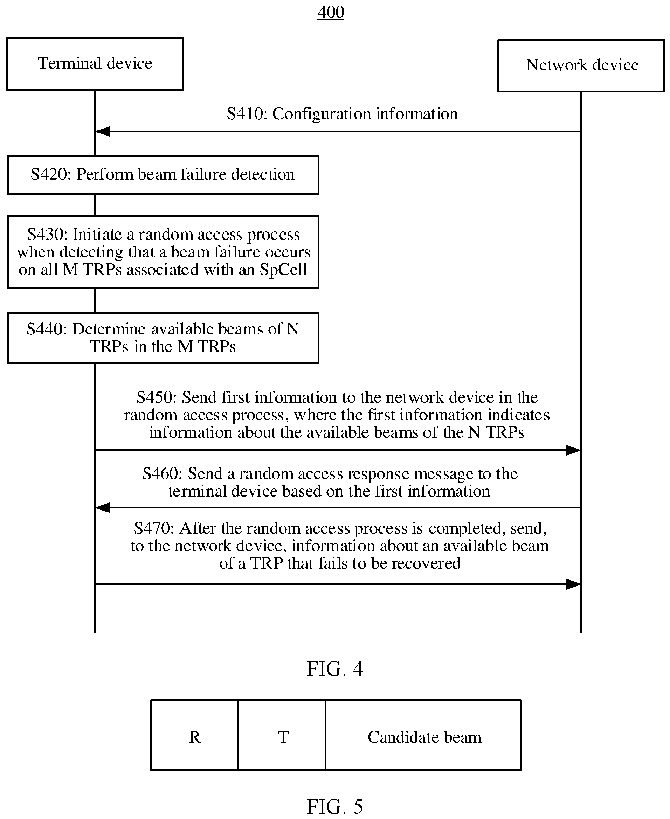

FIG. 4 is a schematic flowchart of a beam failure recovery method 400 according to an embodiment of this application. The method 400 shown in FIG. 4 may include S410 to S470. The following describes a beam failure recovery process in detail with reference to FIG. 4.

S410: A network device sends configuration information to a terminal device. Correspondingly, the terminal device receives the configuration information.

The configuration information may be used to detect a beam failure, identify an available beam, and determine a type of random access. The configuration information includes configuration information of each TRP associated with each of a plurality of cells. It may be understood that the plurality of cells include an SpCell. In other words, the configuration information includes configuration information of each of a plurality of TRPs associated with the SpCell.

For ease of description, it is assumed below that a quantity of TRPs associated with the SpCell is M, where M is an integer greater than 1.

It should be noted that a reference signal corresponds to a beam direction. Therefore, whether the beam failure occurs may be determined through a detection reference signal. In other words, the reference signal may represent the beam direction. The detection reference signal mentioned below may be used to determine whether the beam failure occurs.

Optionally, the configuration information includes one or more of the following: a detection reference signal set, a candidate reference signal set, a reference signal received power (reference signal received power, RSRP) threshold, a beam failure detection timer, a beam failure quantity threshold, and a random access parameter of the SpCell. It should be noted that RSRP thresholds of different cells may be the same or may be different. To be specific, a same RSRP threshold may be configured for a plurality of cells, or one or more RSRP thresholds may be configured for each cell. That a same RSRP threshold is configured for a plurality of cells means that a same RSRP threshold is configured for a plurality of TRPs in the plurality of cells. That one RSRP threshold is configured for each cell means that a same RSRP threshold is configured for a plurality of TRPs in the cell. That a plurality of RSRP thresholds are configured for each cell means that one RSRP threshold is configured for each of a plurality of TRPs in the cell.

Beam failure quantity thresholds of a plurality of TRPs corresponding to a plurality of cells may be the same or may be different. To be specific, a same threshold may be configured for the plurality of cells, or one or more thresholds may be configured for each cell. That a same threshold is configured for the plurality of cells means that a same threshold is configured for a plurality of TRPs in the plurality of cells. That one threshold is configured for each cell means that a same threshold is configured for a plurality of TRPs in the cell. That a plurality of thresholds are configured for each cell means that one threshold is configured for each of a plurality of TRPs in the cell.

It should be noted that the terminal device maintains one beam failure detection timer for each TRP, and initial timing values of timers may be the same or may be different. In addition, the terminal device maintains, for each TRP, a counter that counts a beam failure quantity.

For ease of description, in the following, the RSRP threshold is denoted as a first preset threshold, and the beam failure quantity threshold is denoted as a second preset threshold.

In this embodiment of this application, the random access parameter of the SpCell may include a CFRA in two-step random access (two-step CFRA for short) parameter and/or a CFRA in four-step random access (four-step CFRA for short) parameter. Specifically, the two-step CFRA parameter and the four-step CFRA parameter each include a preamble and an RO that correspond to each of the plurality of TRPs, and a correspondence between the preamble and the RO and a candidate reference signal in the candidate reference signal set.

For example, for one of the plurality of TRPs, the TRP includes two candidate reference signals: a CSI-RS #1 and a CSI-RS #2. In this case, the random access parameter of the SpCell may include (preamble #1, RO #1) and (preamble #2, RO #2), (preamble #1, RO #1) corresponds to the CSI-RS #1, and (preamble #2, RO #2) corresponds to the CSI-RS #2.

S420: The terminal device performs beam failure detection.

For example, the beam failure detection performed by the terminal device may be classified into behavior at a physical layer and behavior at a MAC layer. Specifically, the behavior at the physical layer includes: The terminal device measures an RSRP of each reference signal in the detection reference signal set, and when RSRPs of all reference signals in the detection reference signal set are less than the first preset threshold, the physical layer reports the beam failure to the MAC layer once.

It should be noted that, that the physical layer reports the beam failure to the MAC layer once does not mean that the beam failure occurs on a TRP, and the MAC layer further needs to perform determining based on a timer, a counter, and a received beam failure quantity.

It may be understood that when the physical layer reports the beam failure to the MAC layer, reported content includes identification information of a cell and identification information of the TRP. The identification information of the cell includes a cell identifier (identifier, ID) or a PCI. The identification information of the TRP includes a TRP ID, an ID corresponding to the detection reference signal set, or a control resource set pool index (control resource set pool index, CoresetPoolIndex) corresponding to the TRP. The ID corresponding to the detection reference signal set corresponds to the TRP.

The behavior at the MAC layer includes: When one beam failure reported by the physical layer is received, the MAC layer performs, based on the identification information of the cell and the identification information of the TRP, cumulative counting once on the counter of the TRP in the cell corresponding to beam failure reporting, and restarts the timer corresponding to the TRP in the cell. For one of TRPs in a cell, if a beam failure quantity counted by a counter reaches a second preset threshold corresponding to the TRP before a corresponding timer expires, it is considered that the beam failure occurs on the TRP.

S430: The terminal device initiates a random access process when detecting that the beam failure occurs on all the M TRPs associated with the SpCell.

The terminal device performs the beam failure detection on each of the M TRPs in the SpCell, and initiates the random access process when detecting that the beam failure occurs on all the M TRPs associated with the SpCell.

It should be noted that when it is detected that the beam failure occurs on some of the M TRPs associated with the SpCell, beam failure recovery is performed by sending a MAC CE to the network device. The MAC CE carries identification information of a cell in which the beam failure occurs, identification information of the TRP, and information about an available beam. For a specific process, refer to a conventional technology. For brevity, details are not described herein again.

In addition, when detecting that the beam failure occurs on one or more TRPs in an SCell, the terminal device may also perform the beam failure recovery by sending the MAC CE to the network device. For a specific process, refer to the conventional technology. For brevity, details are not described herein again.

S440: The terminal device determines available beams of N TRPs in the M TRPs.

1 < N ≤ M, and N is an integer. In other words, the terminal device determines that at least two TRPs have available beams. It may be understood that if only one of the M TRPs has an available beam, in other words, the beam failure occurs on some of the M TRPs in the SpCell, the beam failure recovery may be performed by using the conventional technology.

It should be noted that a sequence of performing S430 and S440 by the terminal device is not limited in this embodiment of this application. To be specific, the terminal device may perform S430 and then perform S440, or first perform S440 and then perform S430, or perform S430 and S440 simultaneously. For example, when detecting that the beam failure occurs on all the M TRPs associated with the SpCell, the terminal device determines the available beams of the N TRPs in the M TRPs when initiating the random access process.

For example, the terminal device measures, at the physical layer, an RSRP of each reference signal in a candidate reference signal set of a TRP in the M TRPs, and reports, to the MAC layer, a reference signal that is in the candidate reference signal set and whose RSRP is greater than the first preset threshold. The MAC layer identifies a beam corresponding to the reference signal as an available beam. In this way, the terminal device may determine the available beam of the TRP. If RSRPs of all candidate reference signals are less than or equal to the first preset threshold, the physical layer reports, to the MAC layer, a case in which no available beam is identified.

It may be understood that the foregoing uses one TRP as an example to describe a process in which the terminal device identifies the available beam. The TRP may be any one of the M TRPs. The terminal device may identify available beams for the M TRPs based on a same method.

It may be understood that each TRP corresponds to one or more reference signals, in other words, each TRP corresponds to one or more beams. Therefore, in a possible case, each of the N TRPs corresponds to one available beam. In another possible case, each of the N TRPs corresponds to a plurality of available beams. A quantity of available beams corresponding to each TRP is not limited in this embodiment of this application.

S450: The terminal device sends first information to the network device in the random access process. Correspondingly, the network device receives the first information, where the first information indicates information about the available beams of the N TRPs.

Each of the N TRPs corresponds to one available beam.

It should be noted that the first information indicates the information about the available beams of the N TRPs, and the first information may include one or more messages. When the first information includes a plurality of messages, the plurality of messages may be simultaneously sent, or may be separately sent. This is not limited in this embodiment of this application.

Before the terminal device sends the first information to the network device, the terminal device needs to determine the type of the random access.

Optionally, the terminal device may determine the type of the random access based on one or more of the following: the random access parameter of the SpCell in the configuration information received by the terminal device, the available beams that are of the M TRPs and that are identified by the terminal device, and an RSRP that is of a reference signal and that is measured by the terminal device.

The RSRP that is of the reference signal and that is measured by the terminal device includes a cell-level measurement result and/or a beam-level measurement result. It should be noted that the reference signal herein is a reference signal corresponding to an available beam. For example, a cell includes three TRPs: a TRP #1, a TRP #2, and a TRP #3. A reference signal corresponding to an available beam of the TRP #1 is a CSI-RS #1, a reference signal corresponding to an available beam of the TRP #2 is a CSI-RS #2, and a reference signal corresponding to an available beam of the TRP #3 is a CSI-RS #3. In this case, a highest RSRP in measurement results of the CSI-RS #1, the CSI-RS #2, and the CSI-RS #3 is used as the cell-level measurement result, or an average value of the measurement results of the three reference signals is used as the cell-level measurement result, and the highest RSRP in the measurement results of the CSI-RS #1, the CSI-RS #2, and the CSI-RS #3 is used as the beam-level measurement result.

In a possible implementation, the terminal device determines the type of the random access based on the random access parameter of the SpCell in the received configuration information and the RSRP that is of the reference signal and that is measured by the terminal device. As described above, the terminal device identifies the available beams of the N TRPs.

Specifically, if the configuration information includes the four-step CFRA parameter, four-step CFRA is selected; if the configuration information includes the two-step CFRA parameter, two-step CFRA is selected; or if the configuration information includes the four-step CFRA parameter and the two-step CFRA parameter, the type of the random access is further determined based on reference signal received strength that is of the SpCell and that is measured by the terminal device. In a possible design, when the reference signal received strength of the SpCell is greater than a preset threshold, it is determined that the type of the random access is the two-step CFRA; or when the reference signal received strength of the SpCell is less than or equal to a preset threshold, it is determined that the type of the random access is the four-step CFRA. The preset threshold may be the same as or different from the first preset threshold. For ease of differentiation, the preset threshold is denoted as a third preset threshold.

For example, the reference signal received strength of the SpCell may be understood as an average value of reference signal received strength corresponding to the available beams of the N TRPs in the SpCell, or a maximum value of the reference signal received strength corresponding to the available beams of the N TRPs in the SpCell.

For example, if the configuration information includes the four-step CFRA parameter and the two-step CFRA parameter, and reference signals corresponding to the available beams of the N TRPs in the SpCell are respectively the CSI-RS #1, the CSI-RS #2, and the CSI-RS #3, an average value of received strength of the three reference signals is used as the reference signal received strength of the SpCell, and is compared with the third preset threshold. If the reference signal received strength of the SpCell is greater than the third preset threshold, the terminal device determines that the type of the random access is the two-step CFRA; or if the reference signal received strength of the SpCell is less than or equal to the third preset threshold, the terminal device determines that the type of the random access is the four-step CFRA.

It should be understood that the foregoing describes in detail a process of determining the type of the random access when the terminal device identifies the available beams of the N TRPs. When the terminal device identifies an available beam of only one TRP, the four-step CFRA, two-step CBRA, or four-step CBRA may be selected based on the conventional technology. When no available beam is identified for the M TRPs, the two-step CBRA or the four-step CBRA may be selected based on the conventional technology. For brevity, details are not described herein.

After determining the type of the random access, the terminal device sends the first information to the network device. It should be noted that, if the terminal device selects different types of the random access, the first information sent to the network device is also different. The following separately describes in detail the first information sent by the terminal device when the two-step CFRA or the four-step CFRA is selected.

First, the first information sent when the terminal device selects the two-step CFRA to perform the beam failure recovery is described.

The first information includes one preamble and at least one MAC CE, the preamble indicates an available beam of a first TRP, and the at least one MAC CE indicates an available beam of a TRP other than the first TRP in the N TRPs. It should be understood that the following uses an example in which each of the N TRPs corresponds to one available beam for description.

As described above, the preamble and the RO have a correspondence with an available beam of each TRP. The first TRP includes one available beam, in other words, the first TRP has a correspondence with the preamble and the RO. The terminal device may send, on the RO through a PRACH, the preamble corresponding to the first TRP, and send the at least one MAC CE through a PUSCH. The at least one MAC CE indicates the available beam of the TRP other than the first TRP in the N TRPs. The available beam of the TRP other than the first TRP in the N TRPs may be all TRPs other than the first TRP in the N TRPs, or may be some TRPs other than the first TRP in the N TRPs. This is not limited in this embodiment of this application. In addition, information about the available beam of the TRP other than the first TRP in the N TRPs may be carried in one MAC CE, or may be carried in a plurality of MAC CEs. This is not limited in this embodiment of this application.

It can be easily learned that when the first information includes one preamble and at least one MAC CE, the first information includes a plurality of messages, and the plurality of messages may be sent on a same occasion and through a same channel or may be sent on different occasions and through different channels.

In this embodiment of this application, information about an available beam may be represented by a reference signal resource identifier. When the information about the available beam is carried in the MAC CE, the reference signal resource identifier may be carried in the MAC CE, to indicate the information about the available beam to the network device. It may be understood that there is a correspondence between the reference signal and the beam direction.

Optionally, the first TRP is determined based on reference signal received strength of the N TRPs.

It can be learned from the foregoing descriptions that the terminal device may indicate the available beam of the first TRP by using the preamble. The following describes how to determine the first TRP in the N TRPs. It should be understood that in the following descriptions, an example in which each of the N TRPs corresponds to one available beam is used for description, but this should not constitute any limitation on this embodiment of this application. Each TRP may alternatively correspond to a plurality of available beams.

In a possible implementation, the terminal device determines the first TRP based on RSRPs of the reference signals corresponding to the available beams of the N TRPs. Specifically, a TRP in the N TRPs is determined as the first TRP, provided that an RSRP of a reference signal corresponding to an available beam of the TRP is the highest. For example, the terminal device identifies available beams of three TRPs, where the three TRPs are respectively the TRP #1, the TRP #2, and the TRP #3. The reference signal corresponding to the available beam of the TRP #1 is the CSI-RS #1, the reference signal corresponding to the available beam of the TRP #2 is the CSI-RS #2, and the reference signal corresponding to the available beam of the TRP #3 is the CSI-RS #3. In the measurement results of the CSI-RS #1, the CSI-RS #2, and the CSI-RS #3, an RSRP of the CSI-RS #3 is the highest. In this case, the TRP #3 is determined as the first TRP. It may be understood that information about the available beams of the TRP #1 and the TRP #2 may be reported to the network device by using the MAC CE.

Second, the first information sent when the terminal device selects the four-step CFRA to perform the beam failure recovery is described.

The first information includes N preambles, and the N preambles are in one-to-one correspondence with the available beams of the N TRPs.

In a possible implementation, the terminal device sends the N preambles to the network device in the random access process. The N preambles are in one-to-one correspondence with the available beams of the N TRPs. In other words, the network device may determine, based on the received N preambles, the available beams of the N TRPs corresponding to the N preambles.

For example, available beams that are of two TRPs and that are identified by the terminal device are respectively the TRP #1 and the TRP #2. The reference signal corresponding to the available beam of the TRP #1 is the CSI-RS #1, the reference signal corresponding to the available beam of the TRP #2 is the CSI-RS #2, the CSI-RS #1 corresponds to (preamble #1, RO #1), and the CSI-RS #2 corresponds to (preamble #2, RO #2). In this case, the terminal device sends the preamble #1 on the RO #1, and sends the preamble #2 on the RO #2. Correspondingly, the network device may identify the available beams corresponding to the TRP #1 and the TRP #2 by detecting the preamble #1 on the RO #1 and detecting the preamble #2 on the RO #2.

S460: The network device sends a random access response message to the terminal device based on the first information.

After receiving the first information sent by the terminal device, the network device sends the random access response message to the terminal device, where the random access response message is carried on a PDCCH. The random access response message may indicate a successfully recovered available beam in the available beams that are of the N TRPs and that are reported by the terminal device.

It can be learned from the foregoing descriptions that when the terminal device selects different types of the random access, content included in the first information is different. The first information is different, and content of the random access response message sent by the network device to the terminal device is also different. Therefore, to clearly describe the content of the random access response message sent by the network device to the terminal device, the following separately describes the content of the random access response message sent by the network device in the two-step CFRA and the four-step CFRA.

First, in a possible case, if the type of the random access selected by the terminal device is the two-step CFRA, the first information includes one preamble and at least one MAC CE.

It may be understood that, the terminal device sends the first information to the network device, and the network device may successfully receive the first information, or may not successfully receive the first information. The following describes, from perspectives of different cases in which the network device receives the first information, the content of the random access response message sent by the network device.

In a case, if the network device successfully receives the information about the available beams of the N TRPs, the network device scrambles the random access response message by using a C-RNTI, where the C-RNTI is an RNTI allocated by the network device to the terminal device. For example, that the network device successfully receives the first information includes that the network device successfully receives the preamble in the first information, and successfully receives and decodes the at least one MAC CE in the first information.

In another case, the network device successfully receives information about available beams of n TRPs in the N TRPs, where 1 < n < N, and n is an integer. In other words, the network device successfully receives information about available beams of only some of the N TRPs. For example, the network device successfully receives the preamble in the first information, to be specific, successfully receives information about the available beam of the first TRP, but fails to receive the at least one MAC CE in the first information. That the network device fails to receive the at least one MAC CE in the first information includes that the network device receives the at least one MAC CE but fails to decode the at least one MAC CE, or that the network device fails to receive the at least one MAC CE. In this case, the network device scrambles the random access response message by using a first RNTI, where the first RNTI corresponds to a second TRP, the second TRP is a TRP whose beam is successfully recovered, and the first RNTI is a radio network temporary identifier corresponding to the second TRP. In other words, there is a correspondence between the first RNTI and the second TRP. If the network device successfully receives information about an available beam of the second TRP, the network device sends the random access response message to the network device, where the random access response message is scrambled by using the first RNTI corresponding to the second TRP. After receiving the random access response message, the terminal device may determine, based on the first RNTI, the second TRP whose beam is successfully recovered.

It should be noted that scrambling the random access response message may be understood as scrambling the PDCCH carrying the random access response message, and the two concepts express a same meaning.

According to the foregoing descriptions, when successfully receiving the information about the available beams of some of the N TRPs, the network device may distinguish different TRPs based on the first RNTI. In this way, the terminal device may determine, based on the random access response message, the available beam of the TRP whose beam is successfully recovered.

In another possible design, different TRPs may be distinguished based on a search space in which the PDCCH is located. For example, the search space in which the PDCCH is located corresponds to a second TRP, and the second TRP is a TRP whose beam is successfully recovered. In other words, each TRP corresponds to one search space. For example, the terminal device sends the information about the available beams of the TRP #1 and the TRP #2 to the network device. A search space corresponding to the TRP #1 is a search space #1, a search space corresponding to the TRP #2 is a search space #2, and the network device successfully receives the information about the available beam of the TRP #1. In this case, the network device may send the random access response message to the terminal device in the search space #1.

It should be noted that when the network device successfully receives the information about the available beams of only some TRPs, information that is about an available beam of a TRP and that is not successfully received further needs to be sent again. Therefore, the random access response message may further include uplink grant scheduling information, and information such as a time-frequency resource indicated by the uplink grant scheduling information is used by the terminal device to report again, by using the MAC CE, the information that is about the available beam of the TRP and that is not successfully recovered.

Second, if the type of the random access selected by the terminal device is the four-step CFRA, the first information includes the N preambles. In this case, the content of the random access response message is classified into the following several cases:

In a case, if the network device successfully receives the N preambles, the network device scrambles the random access response message by using a C-RNTI, where the C-RNTI is an RNTI allocated by the network device to the terminal device.

In another case, the network device successfully receives some of the N preambles. In a possible design, the network device scrambles the random access response message by using a first RNTI, where the first RNTI corresponds to a second TRP, and the second TRP is a TRP whose beam is successfully recovered. For example, the N preambles sent by the terminal device include a preamble #1 corresponding to the TRP #1, a preamble #2 corresponding to the TRP #2, and a preamble #3 corresponding to the TRP #3. A preamble successfully received by the network device is the preamble #1, and a first RNTI corresponding to the TRP #1 is an RNTI #1. In this case, the network device scrambles the random access response message by using the RNTI #1, and sends the random access response message to the terminal device.

In another possible design, the network device sends the random access response message in a search space corresponding to the second TRP, where the search space corresponds to the TRP. For example, the terminal device sends, to the network device, a preamble #1 corresponding to the TRP #1 and a preamble #2 corresponding to the TRP #2. A search space corresponding to the TRP #1 is a search space #1, a search space corresponding to the TRP #2 is a search space #2, and the network device successfully receives the preamble #1. In this case, the network device may send the random access response message to the terminal device in the search space #1.

It should be noted that when the terminal device successfully receives the random access response message from the network device, a beam of at least one TRP is successfully recovered, in other words, the terminal device completes the random access process. If the terminal device still needs to report information about an available beam of the TRP to the network device, the terminal device may report the information to the network device by using the MAC CE.

It should be understood that if the terminal device selects the four-step CBRA or the two-step CBRA, for the random access response message sent by the network device to the terminal device, refer to the conventional technology. For brevity, details are not described herein again.

It should be further understood that if the network device successfully receives the information about the available beams of the N TRPs, S470 does not need to be performed. If the network device successfully receives the information about the available beams of only some of the N TRPs, the terminal device still needs to report the information that is about the available beam of the TRP and that is not successfully received, that is, the terminal device needs to perform S470.

S470: After the random access process is completed, the terminal device sends, to the network device, information about an available beam of a TRP that fails to be recovered.

After the terminal device successfully receives the random access response message from the network device, the random access process is completed. It can be learned from the foregoing descriptions that the network device may successfully receive the information about the available beams of only some of the N TRPs. In this case, the terminal device needs to send, to the network device again, the information about the available beam of the TRP that fails to be recovered.

It should be understood that if the network device fails to receive information about an available beam of a TRP, the TRP may be understood as a TRP whose beam is not successfully recovered.

For example, the terminal device may determine, based on a correspondence between the search space and the TRP or the correspondence between the first RNTI and the TRP, the available beam of the TRP that fails to be recovered. For example, if the terminal device receives the random access response message from the network device in the search space #1, it may be determined that the information about the available beam of the TRP #1 corresponding to the search space #1 is successfully received. Further, the terminal device reports, to the network device again, the information about the available beam of the TRP #2 that fails to be recovered.

It should be understood that, when the terminal device fails to receive the random access response message from the network device within a preset time period, the terminal device may send the first information to the network device again.

It should be further understood that, when the terminal device selects the four-step CBRA to perform the random access, the terminal device sends the MAC CE to the network device, to indicate the information about the available beam of the TRP in the SCell. When the terminal device selects the two-step CBRA to perform the random access, the random access response message sent by the network device to the terminal device may indicate the terminal device to roll back to the four-step CBRA. For a specific process, refer to the conventional technology, and details are not described herein.

The terminal device sends, to the network device, the information that is about the available beam and that is not successfully received. After successfully receiving the information, the network device returns, to the terminal device, a response that the information about the available beam is successfully received.

Based on the foregoing technical solution, in the random access process, the terminal device reports the information about the available beams of the plurality of TRPs in the special cell to the network device, to reduce time consumed in the entire beam failure recovery process, and quickly complete beam failure recovery of the plurality of TRPs, thereby improving communication reliability and increasing a transmission capacity.

In the foregoing technical solution, if the terminal device selects the two-step CFRA, the terminal device reports information about available beams of some TRPs by using the MAC CE. Alternatively, it can be learned from the conventional technology that when the beam failure occurs on some TRPs in the SpCell, information about available beams of the TRPs may be reported by using the MAC CE. Alternatively, when the beam failure occurs on some or all TRPs in the SCell, information about available beams of the TRPs may be reported by sending the MAC CE. The following describes a format of a MAC CE in detail with reference to FIG. 5 to FIG. 7. It may be understood that the format of the MAC CE described below may be applied to any one of the foregoing scenarios. This is not limited in embodiments of this application. For example, the format of the MAC CE may be used in combination with the embodiment shown in FIG. 4. In other words, when the terminal device selects the two-step CFRA, and reports information about available beams of some TRPs by using the MAC CE, the format of the MAC CE described below may be used.

FIG. 5 is a schematic diagram of a format of a MAC CE according to an embodiment of this application. As shown in FIG. 5, the MAC CE includes an R field, a T field, and a candidate beam (candidate beam) field. R represents a reserved bit, T represents TRP identity information, for example, 1-bit TRP identity information, and a candidate beam is available beam indication information, for example, a 6-bit reference signal identifier.

It should be noted that if the terminal device reports information about available beams of a plurality of TRPs by using the MAC CE, the candidate beam may include available beam indication information of the plurality of TRPs.

Optionally, the MAC CE further includes a cell identity. The cell identity may identify TRPs in different cells.

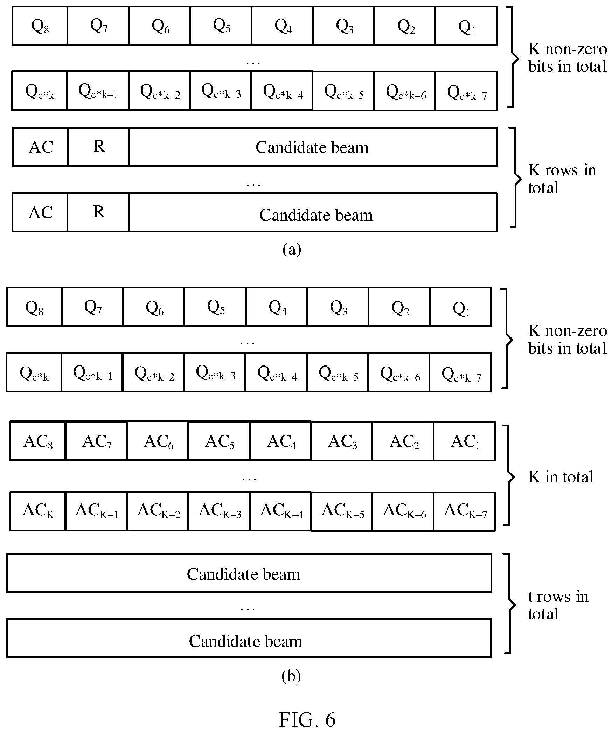

FIG. 6 is a schematic diagram of another format of a MAC CE according to an embodiment of this application.

As shown in (a) in FIG. 6, an example in which there are c cells and each cell includes k TRPs is used. A Q field represents whether a beam failure occurs on a TRP associated with the cell. For example, if the Q field is 1, it indicates that the beam failure occurs on the TRP in the cell; or if the Q field is 0, it indicates that no beam failure occurs on the TRP in the cell. The Q field includes Q₁ to Q_{c*k}. For example, if there are two cells, and each cell includes three TRPs, the Q field has 2 * 3 = 6 bits in total. The Q field includes Q₁ to Q₆. Q₁ corresponds to (cell #1, TRP #1), Q₂ corresponds to (cell #1, TRP #2), Q₃ corresponds to (cell #1, TRP #3), Q₄ corresponds to (cell #2, TRP #1), Q₅ corresponds to (cell #2, TRP #2), and Q₆ corresponds to (cell #2, TRP #3). When Q₄ = 1, the beam failure occurs on the TRP #1 in the cell #2. It can be learned that there are K non-zero bits in the Q field in total. In this case, there are K rows of available beam indication information including an AC field in total. Each row of indication information corresponds to a bit whose value is 1 in the Q field. An AC field in a row indicates whether an available beam is identified for a TRP in a cell corresponding to the row. For example, if AC is 1, it indicates that the TRP in the cell has an available beam, and a candidate beam field in the row indicates available beam information; or If AC is 0, it indicates that no available beam is found for the TRP in the cell, and a candidate beam field in the row has no actual meaning. R is a reserved bit.

As shown in (b) in FIG. 6, the format of the MAC CE shown in (a) in FIG. 6 is correspondingly improved. The AC field is centrally placed before the candidate beam field, and the candidate beam field includes available beam indication information that is of a TRP and whose AC field is indicated as 1. For example, in K TRPs on which the beam failure is detected, t TRPs are identified to have available beams. In this case, there are t rows of available beam indication information in total. In this way, signaling overheads are reduced.

With reference to the embodiment shown in FIG. 4, for the SpCell, when the terminal device selects the two-step CFRA, in other words, when the first information includes one preamble and at least one MAC CE, the MAC CE may not carry the information about the available beam of the first TRP. In a possible design, a candidate beam in the MAC CE does not include available beam indication information of the first TRP, and a bit in a corresponding Q field is set to 0. In another possible design, a candidate beam in the MAC CE does not include available beam indication information of the first TRP, but a bit in a corresponding Q field is set to 1. This design may indicate that a reason for triggering current random access is that beam failure recovery needs to be performed.

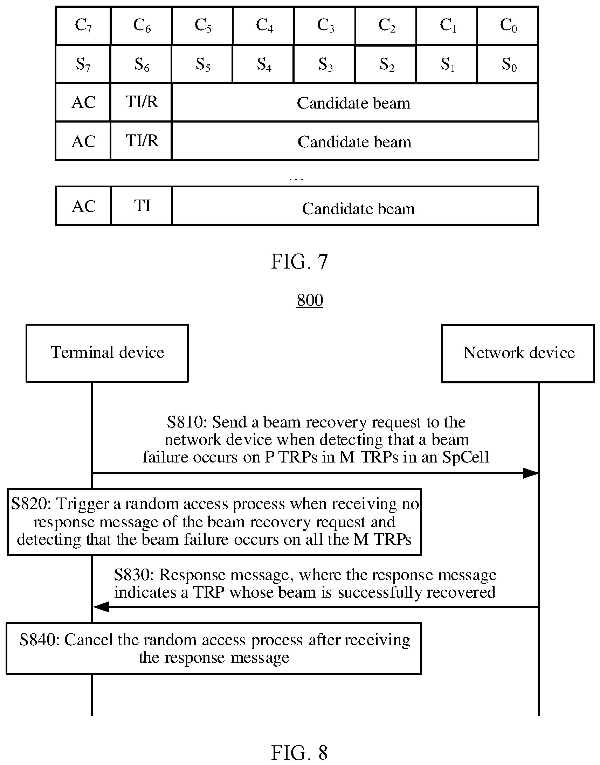

FIG. 7 is a schematic diagram of still another format of a MAC CE according to an embodiment of this application.

As shown in FIG. 7, eight cells are used as an example. A C field is a cell identity, the C field includes C₀ to C₇, and a bit whose value is 1 in the C field indicates that a beam failure occurs on a TRP in a corresponding cell. An S field is a quantity of TRPs on which the beam failure occurs in a corresponding cell, and the S field includes S₀ to S₇. An AC field is an indication indicating whether an available beam is identified, a TI field is TRP identity information, an R field is a reserved bit, and a candidate beam field is available beam indication information.

For example, with reference to the embodiment shown in FIG. 4, when a bit in the C field corresponds to the SpCell and a value of the bit is 1, for example, C₀ is equal to 1, the MAC CE may not carry an available beam indication of the first TRP. It may be understood that the MAC CE may not carry the available beam indication of the first TRP, so that signaling overheads can be reduced. However, this should not constitute any limitation on embodiments of this application. For example, in some other embodiments, the MAC CE may carry the available beam indication of the first TRP.

It may be understood that the format of the MAC CE shown in FIG. 7 and the format of MAC CE shown in (a) in FIG. 6 have a same problem. To be specific, when the AC field is 0, the candidate beam field in the row has no actual meaning. Therefore, a similar adjustment may be performed in FIG. 7: centrally placing the AC field before the candidate beam field, where the candidate beam field includes available beam indication information that is of a TRP and whose AC field is indicated as 1. For brevity, details are not described herein again. For details, refer to the related descriptions in FIG. 6.

It should be noted that when a terminal device has no available uplink resource for sending the MAC CE, the terminal device sends an SR to a network device. There are the following two possible design solutions for SR configuration.

In a possible design, the network device configures a plurality of SR configurations for the terminal device, and each SR configuration corresponds to one SR ID, used to request uplink grant scheduling for sending the MAC CE. Each SR configuration is associated with one TRP. In addition, each SR corresponds to one PUCCH resource. In other words, a beam direction used for sending an SR carried on each PUCCH resource corresponds to a TRP. Specifically, the network device configures a maximum SR transmission count, an SR timer, and an SR counter for each TRP. For example, a TRP #1 corresponds to an SR ID #1, and a TRP #2 corresponds to an SR ID #2. When the SR is sent through a PUCCH resource corresponding to the SR ID #1, a count value of the SR counter corresponding to the SR ID #1 is increased by 1. When the SR is sent through a PUCCH resource corresponding to the SR ID #2, a count value of the SR counter corresponding to the SR ID #2 is increased by 1.

Optionally, when SR counters corresponding to some TRPs reach a maximum SR transmission count, random access is not triggered. The terminal device continues to send the SR through a PUCCH resource corresponding to an SR configuration that does not reach the maximum SR transmission count. When SR counters corresponding to all TRPs reach the maximum SR transmission count, the random access is triggered. For example, a special cell includes two TRPs: a TRP #1 and a TRP #2. When an SR counter corresponding to the TRP #1 reaches a maximum SR transmission count, and an SR counter corresponding to the TRP #1 does not reach the maximum SR transmission count, the random access is not triggered, and the terminal device continues to send an SR through a PUCCH resource associated with the TRP #2. When the SR counter corresponding to the TRP #1 and the SR counter corresponding to the TRP #2 both reach the maximum SR transmission count, the terminal device triggers the random access.

Optionally, when it is detected that the beam failure occurs on P TRPs and there is no available uplink resource for sending a beam recovery request, a scheduling request SR is sent to the network device, where a resource carrying the SR is associated with a third TRP, and the third TRP is a TRP on which no beam failure occurs.

For example, when the beam failure occurs on the TRP #1, and no beam failure occurs on the TRP #2, the terminal device may send the SR through the PUCCH resource corresponding to the TRP #2. In this way, a success rate of sending the SR via a beam direction in which no beam failure occurs is higher. In another possible design, the network device configures an SR configuration for the terminal device, where the SR configuration corresponds to one SR ID. Each SR configuration is associated with a plurality of TRPs. In other words, a plurality of TRPs share one SR configuration. The SR configuration is associated with a plurality of PUCCH resources, and a beam direction of each PUCCH resource is associated with one TRP. For example, when the SR is sent through a PUCCH resource corresponding to the TRP #1, the count value of the SR counter is increased by 1; and when the SR is sent through the PUCCH resource corresponding to the TRP #2, the count value of the SR counter is increased by 1.

Based on the foregoing technical solution, when the terminal device has no available uplink resource for sending the MAC CE, the terminal device may send an SR to the network device, to request uplink grant scheduling for sending the MAC CE. A PUCCH resource carrying an SR corresponds to a TRP, so that the terminal device may send the SR in a good beam direction, thereby helping improve a success rate of sending the SR.

It can be learned from the embodiment shown in FIG. 4 that the beam failure occurs on all M TRPs in the SpCell. It should be understood that when the beam failure occurs on P TRPs of the M TRPs, it means that the beam failure occurs on some TRPs in the SpCell, where 1 ≤ P < M, and P is an integer. In this case, the random access is not yet triggered. Therefore, the terminal device may send the beam recovery request by using the MAC CE. The terminal device triggers a random access process when the terminal device receives no response message of the beam recovery request and detects that the beam failure occurs on all the M TRPs. It may be understood that the terminal device may receive the response message after triggering the random access process, in other words, beams of some TRPs are successfully recovered. However, continuing the random access process may prolong communication interruption time and thereby reduce communication reliability in the random access process.

Therefore, this application provides a beam failure recovery method. The terminal device sends the beam recovery request to the network device when detecting that the beam failure occurs on some TRPs in the SpCell, and triggers the random access process when receiving no response message of the beam recovery request and detecting that the beam failure occurs on all TRPs, or cancels the random access process when receiving the response message from the network device and not completing the random access process, thereby reducing a quantity of occurrences of the random access. This reduces the communication interruption time in the random access process and therefore improves the communication reliability.

FIG. 8 is a schematic flowchart of a beam failure recovery method 800 according to an embodiment of this application. The method 800 shown in FIG. 8 may include S810 to S840. The following describes the method 800 in detail with reference to FIG. 8.

S810: A terminal device sends a beam recovery request to a network device when detecting that a beam failure occurs on P TRPs in M TRPs in an SpCell.

1 ≤ P < M, and P and M are integers. In other words, when the beam failure occurs on some of a plurality of TRPs in the SpCell, the terminal device sends the beam recovery request to the network device, to indicate information about available beams of the P TRPs.

In a possible implementation, the terminal device reports the information about the available beams of the P TRPs to the network device by using a MAC CE. For a specific format of the MAC CE, refer to the foregoing descriptions. Details are not described herein again. For example, the SpCell includes two TRPs: a TRP #1 and a TRP #2. When the beam failure occurs on the TRP #1, and the beam failure does not occur on the TRP #2, the terminal device reports information about an available beam of the TRP #1 to the network device by using the MAC CE.

It should be noted that after determining that the beam failure occurs on the TRP #1, a MAC layer of the terminal device sends the MAC CE to the network device. After sending the MAC CE, the terminal device may cancel the beam failure triggered by the TRP #1 in the SpCell. When the beam failure is canceled, a value of a beam failure detection counter corresponding to the TRP #1 in the SpCell is not reset, but the terminal device does not send the MAC CE to the network device again due to the beam failure that occurs on the TRP #1. This avoids a case of continuously sending the MAC CE, thereby saving resources. When the MAC layer of the terminal device receives again information, indicating that the beam failure occurs on the TRP #1, reported by a physical layer, the beam failure detection counter continuously counts values, and the beam failure is triggered again. In this case, the MAC CE still needs to be sent for beam failure recovery.

S820: The terminal device triggers a random access process when the terminal device receives no response message of the beam recovery request and detects that the beam failure occurs on all the M TRPs.

In a time period in which the terminal device waits to receive the response message from the network device, when detecting that the beam failure occurs on all remaining TRPs other than the P TRPs in the M TRPs, the terminal device triggers the random access process. It should be understood that for specific steps of the random access process, refer to the related descriptions in FIG. 4. For brevity, details are not described herein again.

For example, the SpCell includes two TRPs: the TRP #1 and the TRP #2. When the beam failure occurs on the TRP #1, and the beam failure does not occur on the TRP #2, the terminal device reports the information about the available beam of the TRP #1 to the network device by using the MAC CE. Then, when receiving no response message and detecting that the beam failure occurs on the TRP #2, the terminal device triggers the random access process.

S830: The network device sends the response message to the terminal device, where the response message indicates a TRP whose beam is successfully recovered. Correspondingly, the terminal device receives the response message.

The terminal device receives the response message, in other words, beams of the P TRPs are successfully recovered. In this case, count values of counters of the P TRPs are reset.

For example, in the example in S830, if the terminal device receives the response message of the beam recovery request for the TRP #1, in other words, a beam of the TRP #1 is successfully recovered, a counter of the TRP #1 is reset.

S840: After receiving the response message, the terminal device cancels the random access process.

After receiving the response message from the network device, if the random access process triggered by the beam failure is not completed, the terminal device cancels the random access process. In this case, the beams of the P TRPs are successfully recovered. It can be learned from the foregoing descriptions that the beam failure also occurs on the remaining TRPs other than the P TRPs in the M TRPs, and the terminal device may request to perform beam recovery by using the MAC CE. For example, in the example in S830, the beam of the TRP #1 is successfully recovered, and after canceling random access, the terminal device may report information about an available beam of the TRP #2 by using the MAC CE.

In the method 800, optionally, a type of the random access includes CBRA.

It may be understood that when the type of the random access is the CBRA, all terminal devices in a cell share a random access resource. If the random access process is canceled, a quantity of terminal devices that are in the cell and that contend for the random access resource may be reduced. When the type of the random access is CFRA, each terminal device has a random access resource. Therefore, the terminal device may cancel the random access process, or may not cancel the random access process. This is not limited in this embodiment of this application.

Based on the foregoing technical solution, when the terminal device receives, from the network device, the response message of the beam recovery request for some TRPs, and the random access process triggered by the beam failure is not completed, the terminal device cancels the random access process, to reduce a quantity of occurrences of the random access, thereby reducing communication interruption time in the random access process, improving communication reliability, and increasing a transmission capacity.

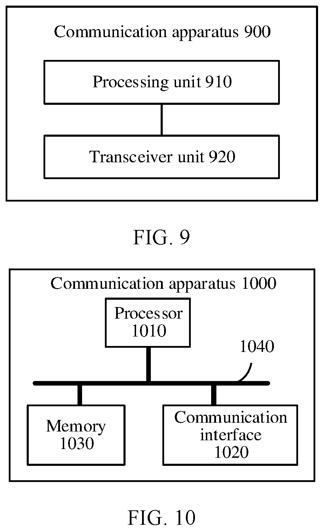

FIG. 9 to FIG. 11 are schematic diagrams of structures of possible communication apparatuses according to embodiments of this application.

As shown in FIG. 9, a communication apparatus 900 includes a processing unit 910 and a transceiver unit 920.

The communication apparatus 900 is configured to implement a function of the terminal device in the method embodiment shown in FIG. 4, or the communication apparatus 900 may include a module configured to implement any function or operation of the terminal device in the method embodiment shown in FIG. 4. The module may be wholly or partially implemented by using software, hardware, firmware, or any combination thereof. The communication apparatus 900 is configured to implement a function of the network device in the method embodiment shown in FIG. 4, or the communication apparatus 900 may include a module configured to implement any function or operation of the network device in the method embodiment shown in FIG. 4. The module may be wholly or partially implemented by using software, hardware, firmware, or any combination thereof.

The communication apparatus 900 is configured to implement a function of the terminal device in the method embodiment shown in FIG. 8, or the communication apparatus 900 may include a module configured to implement any function or operation of the terminal device in the method embodiment shown in FIG. 8. The module may be wholly or partially implemented by using software, hardware, firmware, or any combination thereof. The communication apparatus 900 is configured to implement a function of the network device in the method embodiment shown in FIG. 8, or the communication apparatus 900 may include a module configured to implement any function or operation of the network device in the method embodiment shown in FIG. 8. The module may be wholly or partially implemented by using software, hardware, firmware, or any combination thereof.

When the communication apparatus 900 is configured to implement the function of the terminal device in the method embodiment shown in FIG. 4, the transceiver unit 920 is configured to: receive configuration information from the network device; send first information to the network device in a random access process, where the first information indicates information about available beams of N TRPs; and receive a random access response message from the network device. The processing unit 910 is configured to: perform beam detection; initiate the random access process when it is detected that a beam failure occurs on all M TRPs associated with an SpCell; and determine the available beams of the N TRPs in the M TRPs.

When the communication apparatus 900 is configured to implement the function of the network device in the method embodiment shown in FIG. 4, the transceiver unit 920 is configured to: send configuration information; receive first information from the terminal device; and send a random access response message to the terminal device based on the first information.

When the communication apparatus 900 is configured to implement the function of the terminal device in the method embodiment shown in FIG. 8, the transceiver unit 920 is configured to: send a beam recovery request to the network device when it is detected that a beam failure occurs on P TRPs in M TRPs in an SpCell; and receive a response message from the network device, where the response message indicates a TRP whose beam is successfully recovered. The processing unit 910 is configured to: trigger a random access process when receiving no response message of the beam recovery request and detecting that the beam failure occurs on all the M TRPs; and cancel the random access process after receiving the response message.

When the communication apparatus 900 is configured to implement the function of the network device in the method embodiment shown in FIG. 8, the transceiver unit 920 is configured to: receive a beam recovery request from the terminal device; and send a response message to the terminal device, where the response message indicates a TRP whose beam is successfully recovered.

For more detailed descriptions of the processing unit 910 and the transceiver unit 920, refer directly to the related descriptions in the method embodiment shown in FIG. 4 or FIG. 8. Details are not described herein again.

FIG. 10 is a schematic block diagram of a communication apparatus 1000 according to an embodiment of this application. The apparatus 1000 may be a chip system, or may be an apparatus configured with a chip system, to implement a communication function in the foregoing method embodiment. In this embodiment of this application, the chip system may include a chip, or may include a chip and another discrete component.

As shown in FIG. 10, the apparatus 1000 may include a processor 1010 and a communication interface 1020. The communication interface 1020 is configured to communicate with another device via a transmission medium, so that an apparatus in the apparatus 1000 may communicate with the another device. The communication interface 1020 may be, for example, a transceiver, an interface, a bus, a circuit, or an apparatus that can implement a transceiver function. The processor 1010 may input and output data via the communication interface 1020, and is configured to implement the beam failure recovery method in the embodiment corresponding to FIG. 4 or FIG. 8. Specifically, the apparatus 1000 may be configured to implement functions of the network device or the terminal device in the foregoing method embodiments.

When the communication apparatus 1000 is configured to implement the method shown in FIG. 4 or FIG. 8, the processor 1010 is configured to implement a function of the processing unit 910, and the communication interface 1020 is configured to implement a function of the transceiver unit 920.

Optionally, the apparatus 1000 further includes at least one memory 1030, configured to store program instructions and/or data. The memory 1030 is coupled to the processor 1010. The coupling in this embodiment of this application may be an indirect coupling or a communication connection between apparatuses, units, or modules in an electrical form, a mechanical form, or another form, and is used for information exchange between the apparatuses, the units, or the modules. The processor 1010 may cooperate with the memory 1030. The processor 1010 may execute the program instructions stored in the memory 1030. At least one of the at least one memory may be included in the processor.

In this embodiment of this application, a specific connection medium among the processor 1010, the communication interface 1020, and the memory 1030 is not limited. In this embodiment of this application, in FIG. 10, the processor 1010, the communication interface 1020, and the memory 1030 are connected through a bus 1040. The bus 1040 is represented by a thick line in FIG. 10, and a connection manner between other components is merely described as an example, and is not limited thereto. The bus may be classified into an address bus, a data bus, a control bus, and the like. For ease of representation, only one thick line is used to represent the bus in FIG. 10, but this does not mean that there is only one bus or only one type of bus.

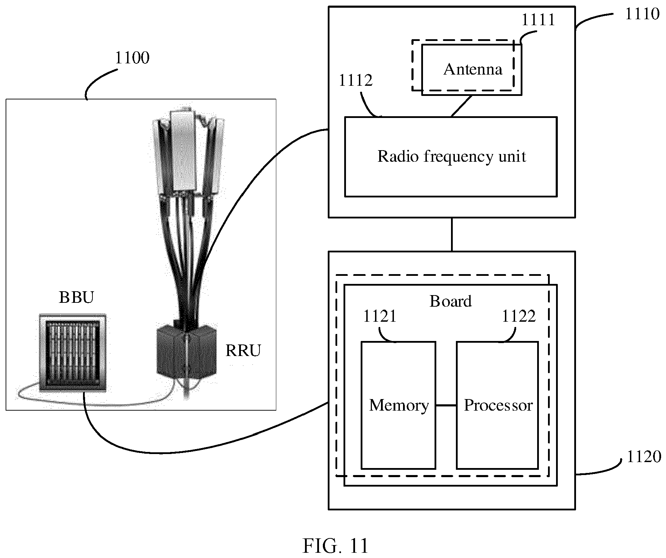

FIG. 11 is a schematic diagram of a structure of a network device according to an embodiment of this application, for example, may be a schematic diagram of a structure of a base station. A base station 1100 may perform a function of the network device in the foregoing method embodiments. As shown in FIG. 11, the base station 1100 may include one or more radio frequency units, such as a remote radio unit (remote radio unit, RRU) 1110 and one or more baseband units (BBU) (which may also be referred to as a distributed unit (DU)) 1120. The RRU 1110 may be referred to as a transceiver unit, and corresponds to the transceiver unit 920 in FIG. 9. Optionally, the RRU 1110 may also be referred to as a transceiver machine, a transceiver circuit, a transceiver, or the like, and may include at least one antenna 1111 and a radio frequency unit 1112. Optionally, the RRU 1110 may include a receiving unit and a sending unit. The receiving unit may correspond to a receiver (or referred to as a receiving machine or a receiving circuit), and the sending unit may correspond to a transmitter (or referred to as a transmitting machine or a transmitting circuit). The RRU 1110 is mainly configured to receive and send a radio frequency signal and perform conversion between the radio frequency signal and a baseband signal, for example, configured to send configuration information to a terminal device. The BBU 1120 is mainly configured to perform baseband processing, control a base station, and the like. The RRU 1110 and the BBU 1120 may be physically disposed together, or may be physically separated, that is, in a distributed base station.

The BBU 1120 is a control center of the base station, or may be referred to as a processing unit. The BBU 1120 may correspond to the processing unit 910 in FIG. 9, and is mainly configured to implement a baseband processing function, for example, channel coding, multiplexing, modulation, or spreading. For example, the BBU (the processing unit) may be configured to control the base station to perform an operation process related to the network device in the foregoing method embodiments.

In an example, the BBU 1120 may include one or more boards. A plurality of boards may jointly support a radio access network (for example, an LTE network) having a single access standard, or may separately support radio access networks (for example, an LTE network, a 5G network, and another network) having different access standards. The BBU 1120 further includes a memory 1121 and a processor 1122. The memory 1121 is configured to store necessary instructions and necessary data. The processor 1122 is configured to control the base station to perform a necessary action, for example, is configured to control the base station to perform an operation process related to the network device in the foregoing method embodiments. The memory 1121 and the processor 1122 may serve the one or more boards. In other words, a memory and a processor may be disposed on each board. Alternatively, a plurality of boards may share a same memory and a same processor. In addition, a necessary circuit may further be disposed on each board.

It should be understood that the base station 1100 shown in FIG. 11 can implement each process related to the network device in the method embodiment shown in FIG. 4 or FIG. 8. Operations and/or functions of the modules in the base station 1100 are intended to implement corresponding processes in the foregoing method embodiments. For details, refer to the descriptions in the foregoing method embodiments. To avoid repetition, detailed descriptions are properly omitted herein.

The BBU 1120 may be configured to perform an action that is described in the foregoing method embodiments and that is implemented inside the network device, and the RRU 1110 may be configured to perform an action that is described in the foregoing method embodiments and that is of sending performed by the network device to the terminal device or receiving performed by the network device from the terminal device. For details, refer to the descriptions in the foregoing method embodiments. Details are not described herein again.

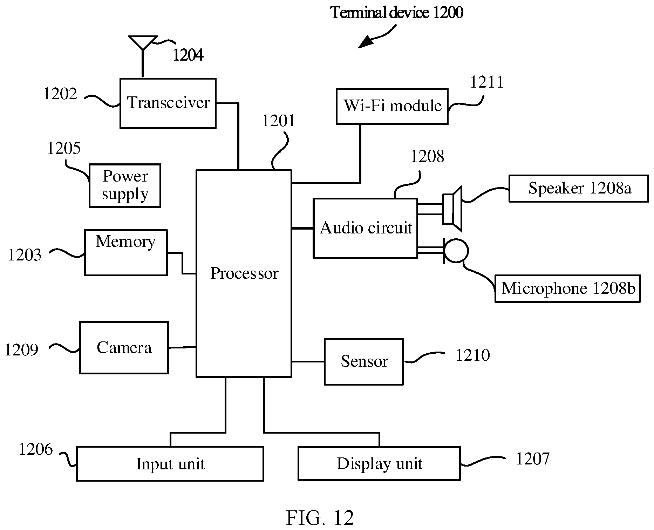

FIG. 12 is a schematic diagram of a structure of a terminal device according to an embodiment of this application. A terminal device 1200 has a function of the terminal device shown in FIG. 4 or FIG. 8. The terminal device 1200 may be used in the communication system 300 shown in FIG. 3. As shown in FIG. 12, the terminal device 1200 includes a processor 1201 and a transceiver 1202. Optionally, the terminal device 1200 further includes a memory 1203. The processor 1201, the transceiver 1202, and the memory 1203 communicate with each other through an internal connection channel to transmit a control signal and/or a data signal. The memory 1203 is configured to store a computer program. The processor 1201 is configured to invoke the computer program from the memory 1203 and run the computer program, to control the transceiver 1202 to transmit or receive a signal. Optionally, the terminal device 1200 may further include an antenna 1204, configured to send, through a radio signal, uplink data or uplink control signaling that is output by the transceiver 1202. Optionally, the terminal device 1200 further includes a Wi-Fi module 1211, configured to access a wireless network.

The processor 1201 and the memory 1203 may be integrated into a processing apparatus, and the processor 1201 is configured to execute program code stored in the memory 1203, to perform the foregoing functions. In specific implementation, the memory 1203 may alternatively be integrated into the processor 1201, or may be independent of the processor 1201. The processor 1201 may correspond to the processing unit 910 in FIG. 9 or the processor 1010 in FIG. 10.

The transceiver 1202 may correspond to the transceiver unit 920 in FIG. 9 or the communication interface 1020 in FIG. 10. The transceiver 1202 may include a receiver (or referred to as a receiving machine or a receiving circuit) and a transmitter (or referred to as a transmitting machine or a transmitting circuit). The receiver is configured to receive a signal, and the transmitter is configured to transmit a signal.

Optionally, the terminal device 1200 may further include a power supply 1205, configured to supply power to components or circuits in the terminal device 1200.

In addition, to further improve the functions of the terminal device, the terminal device 1200 may further include one or more of the following: an input unit 1206, a display unit 1207, an audio circuit 1208, a camera 1209, a sensor 1210, and the like, and the audio circuit may further include a speaker 1208a, a microphone 1208b, and the like.

It should be understood that the terminal device 1200 shown in FIG. 12 can implement each process related to the terminal device in the method embodiment shown in FIG. 4 or FIG. 8. Operations and/or functions of the modules in the terminal device 1200 are intended to implement corresponding processes in the foregoing method embodiments. For details, refer to the descriptions in the foregoing method embodiments. To avoid repetition, detailed descriptions are properly omitted herein.

When the terminal device 1200 is configured to perform an operation process related to the terminal device in the foregoing method embodiments, the processor 1201 may be configured to perform an action that is described in the foregoing method embodiments and that is implemented inside the terminal device, and the transceiver 1202 may be configured to perform an action that is described in the foregoing method embodiments and that is of sending performed by the terminal device to the network device or receiving performed by the terminal device from the network device. For details, refer to the descriptions in the foregoing method embodiments. Details are not described herein again.

This application further provides a computer program product. The computer program product includes a computer program (which may also be referred to as code or instructions). When the computer program is run, a computer is enabled to perform the method performed by the terminal device or the method performed by the network device in the embodiment shown in FIG. 4 or FIG. 8.

This application further provides a computer-readable storage medium. The computer-readable storage medium stores a computer program (which may also be referred to as code or instructions). When the computer program is run, a computer is enabled to perform the method performed by the terminal device or the method performed by the network device in the embodiment shown in FIG. 4 or FIG. 8.

An embodiment of this application provides a communication system. The communication system includes the terminal device and the network device described above.

It should be noted that the processor in embodiments of this application may be an integrated circuit chip, and has a signal processing capability. In an implementation process, steps in the foregoing method embodiments may be implemented by using a hardware integrated logical circuit in the processor, or by using instructions in a form of software. The foregoing processor may be a general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, or a discrete hardware component. The processor may implement or perform the methods, steps, and logical block diagrams that are disclosed in embodiments of this application. The general-purpose processor may be a microprocessor, or the processor may be any conventional processor or the like. Steps of the methods disclosed with reference to embodiments of this application may be directly executed and accomplished by a hardware decoding processor, or may be executed and accomplished by a combination of hardware and software modules in the decoding processor. A software module may be located in a mature storage medium in the art, such as a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor.

It may be understood that the memory in embodiments of this application may be a volatile memory or a non-volatile memory, or may include a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example and not limitation, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus random access memory (direct rambus RAM, DR RAM). It should be noted that the memory of the systems and methods described in this specification includes but is not limited to these memories and any memory of another proper type.

The terms such as "unit" and "module" used in this specification may indicate computer-related entities, hardware, firmware, combinations of hardware and software, software, or software being executed. The units and modules in embodiments of this application have the same meaning, and may be used interchangeably.

A person of ordinary skill in the art may be aware that, in combination with illustrative logical blocks (illustrative logical blocks) and steps (steps) described in embodiments disclosed in this specification, the units and modules can be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application. In the several embodiments provided in this application, it should be understood that the disclosed apparatus, device, and method may be implemented in another manner. For example, the described apparatus embodiment is merely an example. For example, division into the units is merely logical function division and there may be another division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in an electronic form, a mechanical form, or another form.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

In the foregoing embodiments, the functions of the functional units may be wholly or partially implemented by using software, hardware, firmware, or any combination thereof. When software is used to implement the embodiments, the embodiments may be wholly or partially implemented in a form of a computer program product. The computer program product includes one or more computer instructions (programs). When the computer program instructions (programs) are loaded and executed on a computer, the processes or functions according to embodiments of this application are wholly or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), or an optical medium (for example, a digital video disc (digital video disc, DVD)), a semiconductor medium (for example, a solid-state disk (solid-state disk, SSD)), or the like.

When the functions are implemented in a form of a software functional unit and sold or used as an independent product, the functions may be stored in a computer-readable storage medium. Based on such an understanding, the technical solutions of this application essentially, or the part contributing to the prior art, or some of the technical solutions may be implemented in a form of a software product. The software product is stored in a storage medium, and includes several instructions for enabling a computer device (such as a personal computer, a server, or a network device) to perform all or some of the steps of the methods described in embodiments of this application. The foregoing storage medium includes any medium that can store program code, such as a USB flash drive, a removable hard disk, a ROM, a RAM, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A beam failure recovery method, wherein the method is applied to a terminal device, and the method comprises:
initiating a random access process when detecting that a beam failure occurs on all M transmission reception points TRPs associated with a special cell SpCell;
determining available beams of N TRPs in the M TRPs, wherein 1 < N ≤ M, and M and N are integers; and
sending first information to a network device in the random access process, wherein the first information indicates information about the available beams of the N TRPs, and each of the N TRPs corresponds to one available beam.

2. The method according to claim 1, wherein the sending first information to a network device in the random access process comprises:
sending N preambles to the network device in the random access process, wherein the N preambles are in one-to-one correspondence with the available beams of the N TRPs.

3. The method according to claim 2, wherein a type of random access is contention-free random access CFRA in four-step random access.

4. The method according to claim 1, wherein the first information comprises one preamble and at least one medium access control MAC control element CE, the preamble indicates an available beam of a first TRP, and the at least one MAC CE indicates an available beam of a TRP other than the first TRP in the N TRPs.

5. The method according to claim 4, wherein the method further comprises:
determining the first TRP based on reference signal received strength of the N TRPs in the SpCell.

6. The method according to claim 4 or 5, wherein a type of random access is CFRA in two-step random access.

7. The method according to any one of claims 3 to 6, wherein the method further comprises:
determining the type of the random access based on reference signal received strength of the SpCell.

8. The method according to claim 7, wherein the determining the type of the random access based on reference signal received strength of the SpCell comprises:
if the reference signal received strength of the SpCell is greater than a preset threshold, determining that the type of the random access is the CFRA in the two-step random access; or
if the reference signal received strength of the SpCell is less than or equal to a preset threshold, determining that the type of the random access is the CFRA in the four-step random access.

9. The method according to any one of claims 1 to 8, wherein the method further comprises:
receiving configuration information from the network device, wherein the configuration information comprises a CFRA parameter in the two-step random access and/or a CFRA parameter in the four-step random access.

10. The method according to any one of claims 1 to 9, wherein the method further comprises:
receiving a random access response message from the network device, wherein the random access response message is carried on a physical downlink control channel PDCCH, wherein
the PDCCH is scrambled by using a first radio network temporary identifier RNTI, the first RNTI corresponds to a second TRP, and the second TRP is a TRP whose beam is successfully recovered; a search space in which the PDCCH is located corresponds to a second TRP, and the second TRP is a TRP whose beam is successfully recovered; or the PDCCH is scrambled by using a cell radio network temporary identifier C-RNTI, and the C-RNTI corresponds to the terminal device.

11. The method according to any one of claims 1 to 10, wherein the method further comprises:
after the random access process is completed, sending, to the network device, information about an available beam of a TRP that fails to be recovered.

12. A beam failure recovery method, wherein the method is applied to a network device, and the method comprises:
receiving first information from a terminal device in a random access process, wherein the first information indicates information about available beams of N transmission reception points TRPs in M TRPs associated with a special cell SpCell, each of the N TRPs corresponds to one available beam, and the random access process is a process triggered when the terminal device detects that a beam failure occurs on all the M TRPs, wherein 1 < N ≤ M, and M and N are integers; and
sending a random access response message to the terminal device based on the first information.

13. The method according to claim 12, wherein the receiving first information from a terminal device in a random access process comprises:
receiving N preambles from the terminal device in the random access process, wherein the N preambles are in one-to-one correspondence with the available beams of the N TRPs.

14. The method according to claim 13, wherein a type of random access is contention-free random access CFRA in four-step random access.

15. The method according to claim 12, wherein the first information comprises one preamble and at least one medium access control MAC control element CE, the preamble indicates an available beam of a first TRP, and the at least one MAC CE indicates an available beam of a TRP other than the first TRP in the N TRPs.

16. The method according to claim 15, wherein a type of random access is CFRA in two-step random access.

17. The method according to any one of claims 12 to 16, wherein the method further comprises:
sending configuration information to the terminal device, wherein the configuration information comprises a CFRA parameter in the two-step random access and/or a CFRA parameter in the four-step random access.

18. The method according to any one of claims 12 to 17, wherein the random access response message is carried on a physical downlink control channel PDCCH; and
when information about available beams of n TRPs in the N TRPs is successfully received, the PDCCH is scrambled by using a first radio network temporary identifier RNTI, the first RNTI corresponds to a second TRP, and the second TRP is a TRP whose beam is successfully recovered; or a search space in which the PDCCH is located corresponds to a second TRP, and the second TRP is a TRP whose beam is successfully recovered, wherein 1 < n < N, and n is an integer; or
when the information about all the available beams of the N TRPs is received, the PDCCH is scrambled by using a cell radio network temporary identifier C-RNTI, and the C-RNTI corresponds to the terminal device.

19. The method according to any one of claims 12 to 18, wherein the method further comprises:
after the random access process is completed, receiving, from the terminal device, information about an available beam of a TRP that fails to be recovered.

20. A communication apparatus, comprising a unit configured to perform the method according to any one of claims 1 to 11.

21. A communication apparatus, comprising a processor and a memory, wherein the processor is coupled to the memory, and the processor is configured to control the communication apparatus to implement the method according to any one of claims 1 to 11.

22. A communication apparatus, comprising a processor and an interface circuit, wherein the interface circuit is configured to: receive a signal from a communication apparatus other than the communication apparatus and transmit the signal to the processor, or send a signal from the processor to a communication apparatus other than the communication apparatus; and the processor is configured to implement the method according to any one of claims 1 to 11 by using a logic circuit or by executing code instructions.

23. A communication apparatus, comprising a unit configured to perform the method according to any one of claims 12 to 19.

24. A communication apparatus, comprising a processor and a memory, wherein the processor is coupled to the memory, and the processor is configured to control the communication apparatus to implement the method according to any one of claims 12 to 19.

25. A communication apparatus, comprising a processor and an interface circuit, wherein the interface circuit is configured to: receive a signal from a communication apparatus other than the communication apparatus and transmit the signal to the processor, or send a signal from the processor to a communication apparatus other than the communication apparatus; and the processor is configured to implement the method according to any one of claims 12 to 19 by using a logic circuit or by executing code instructions.

26. A computer-readable storage medium, wherein the storage medium stores a computer program or instructions, and when the computer program or the instructions are executed by a computer, the method according to any one of claims 1 to 19 is implemented.

27. A computer program product, wherein the computer program product comprises instructions; and when the instructions are run by a computer, the method according to any one of claims 1 to 19 is implemented.
